# EUROPEAN PATENT APPLICATION

(11) **EP 4 093 060 A1**
(43) Date of publication of application: **23.11.2022**
(21) Application number: 21174666.4
(22) Date of filing: 19.05.2021
(51) Int. Cl.: H04W 4/02, H04L 29/06, H04W 12/104, H04W 12/61

(54) **METHODS AND APPARATUS FOR PROVIDING TIME VALID LOCATION BASED INFORMATION**

(71) Applicant: HERE Global B.V., 5611 ZT Eindhoven (NL)
(72) Inventor: LANFRANCHI,, Giovanni, 10115 Berlin (DE); KONDRASHOV,, Oleksandr, 10115 Berlin (DE); DERIN,, Onur, 5611 ZT Eindhoven (NL); OVERBEEK,, Edzard, 5611 ZT Eindhoven (NL)
(74) Representative: Potter Clarkson

(57) **Abstract**

A computer-implemented method can provide time-valid location-based information. The method comprises: for an environment, defining a plurality of cells, each cell comprising: a respective location with a range based on a geographical extent of the respective cell within the environment; a respective predetermined validity-time-interval; respective semantic-location-data relevant to the respective location; respective executable code instructions configured to operate on the respective semantic-location-data to enable determination of respective time-valid location-based information upon execution of the respective code instructions by a first edge computing apparatus proximal to the respective location. The respective time-valid location-based information is valid within the respective predetermined validity-time-interval.

## Description

### BACKGROUND

The present disclosure relates to apparatus, systems and methods for providing time-valid location-based information, and in particular, although not necessarily, for providing information about a location of a client device and/or information for a client device at a location.

### SUMMARY

According to a first aspect of the present disclosure there is provided a computer-implemented method for providing time-valid location-based information. The method comprises:
for an environment, defining a plurality of cells, each cell comprising:
   a respective location with a range based on a geographical extent of the respective cell within the environment;
   a respective predetermined validity-time-interval;
   respective semantic-location-data relevant to the respective location;
   respective executable code instructions configured to operate on the respective semantic-location-data to enable determination of respective time-valid location-based information upon execution of the respective code instructions by a first edge computing apparatus proximal to the respective location;
wherein the respective time-valid location-based information is valid within the respective predetermined validity-time-interval.

Optionally, the geographical extent of the respective cell of the plurality of cells may be a 3-dimensional-geographical-extent.

Optionally, the first edge computing apparatus may be configured to execute the respective code instructions on the respective semantic-location-data to generate a signed certificate comprising the respective time-valid location-based information for the cell; a second edge computing apparatus proximal to the respective location may be configured to: execute the respective code instructions on the respective semantic-location-data to generate validation information; and when the signed certificate matches the validation information to within a predetermined threshold, validate the signed certificate to provide a validated signed certificate.

Optionally, for a respective cell of the plurality of cells: the respective semantic-location-data may comprise presence-data representative of a first-indication-of-presence of a client-device within the geographic extent of the respective cell; the signed certificate may be representative of the first-indication-of-presence of the client-device within the geographic extent of the respective cell; the validation information may be representative of a second-indication-of-presence of the client-device within the geographic extent of the respective cell; the signed certificate matches the validation information when an overlap between the first-indication-of-presence and the second-indication-of-presence satisfies an overlap criterion; and when the signed certificate matches the validation information, the validated signed certificate comprises location-data representative of the location of the client-device within the respective cell.

Optionally, when the validated signed certificate comprises location-data representative of the location of the client-device within the respective cell, providing the client-device with access to cell-information relevant to the respective cell.

Optionally, when the validated signed certificate comprises location-data representative of the location of the client-device within the respective cell, enabling the client-device to communicate with a second-device present in the respective cell.

Optionally, the plurality of cells may comprise: a first cell; a second cell; a third cell; and wherein: the first cell may be related to the second cell by a first mapping; the second cell may be related to the third cell by a second mapping; the first cell may be related to the third cell by a third mapping comprising a product of the first mapping with the second mapping; and the third cell may comprise a union of the first cell and the second cell.

Optionally, when a validated signed certificate comprises location-data representative of a presence of a first-client-device within the first cell, providing the first-client-device access to one or more of: second-semantic-location-data relevant to the second cell; a second-device within the second cell; third-semantic-location-data relevant to the third cell; and a third-device within the third cell.

Optionally, the first cell may be geographically spaced apart from the second cell such that the first cell may be non-overlapping and non-coterminous with the second cell. Optionally, the third cell may comprise an intermediate-cell, different than the first cell and the second cell. When the validated signed certificate comprises location-data representative of a presence of the first-client-device within the first cell, providing first-cell-functionality to the first-client-device. When the validated signed certificate comprises an intermediate signed certificate that comprises intermediate-location-data representative of a presence of the first-client-device within the intermediate cell, providing an intermediate-cell-functionality to the first-client-device, wherein the intermediate-cell-functionality may be different than the first-cell-functionality.

Optionally, defining a blockchain operative on an edge computing network comprising the first edge computing apparatus; defining a smart contract for a cell of the plurality of cells, wherein the smart contract may comprise the respective executable code instructions for the cell; executing, using the first edge computing apparatus, the smart contract on the respective semantic-location-data for the cell to provide a signed certificate comprising the respective time-valid location-based information for the cell; and writing the signed certificate into the blockchain.

Optionally, the edge computing network comprises the second edge computing apparatus, the method comprising: executing, using the second edge computing apparatus, the smart contract on the respective semantic-location-data to provide validation information; and when the validation information matches the signed certificate to within a predetermined threshold, writing a validated signed certificate, comprising the respective time-valid location-based information, to the blockchain.

Optionally, the validated signed certificate may be configured to provide the respective time-valid location-based information for the cell to one or more of: the cell; an object associated with the cell; a different cell of the plurality of cells; and a different object associated with the different cell.

According to a further aspect of the present disclosure there is provided a system configured to provide time-valid location-based information for an environment comprising a plurality of cells, each cell comprising:
a respective location with a range based on a geographical extent of the respective cell within the environment;
a respective predetermined validity-time-interval;
respective semantic-location-data relevant to the respective location;
respective executable code instructions configured to operate on the respective semantic-location-data to enable determination of respective time-valid location-based information. The system may comprise: a first edge computing apparatus proximal to the respective location of the respective cell of the plurality of cells, the first edge computing apparatus may be configured to execute the respective code instructions to enable determination of the respective time-valid location-based information, and wherein the respective time-valid location-based information may be valid within the respective predetermined validity-time-interval.

According to a further aspect of the present disclosure there is provided a computer program product, or a computer readable memory medium, including one or more sequences of one or more instructions which, when executed by one or more processors, cause an apparatus or system to at least perform the steps of any method disclosed herein.

According to a further aspect of the present disclosure there is provided a data structure for providing time-valid location-based information for an environment defined by a plurality of cells, each cell comprising a respective location with a range based on a geographical extent of the respective cell within the environment, the data structure comprising data defining:
a respective predetermined validity-time-interval;
respective semantic-location-data relevant to the respective location; and
respective executable code instructions configured to operate on the respective semantic-location-data to enable determination of respective time-valid location-based information upon execution of the respective code instructions by a first edge computing apparatus proximal to the respective location;
wherein the respective time-valid location-based information is valid within the respective predetermined validity-time-interval.

Optionally, the data structure may further define a blockchain operative on an edge computing network comprising the first edge computing apparatus; and a smart contract for a cell of the plurality of cells, wherein the smart contract comprises the respective executable code instructions for the cell.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The Figures and Detailed Description that follow also exemplify various example embodiments. Various example embodiments may be more completely understood in consideration of the following Detailed Description in connection with the accompanying Drawings.

### BRIEF DESCRIPTION OF DRAWINGS

One or more embodiments will now be described by way of example only with reference to the accompanying drawings in which:
Figure 1 shows a schematic representation of a plan view of a TensorCell;
Figure 2 shows a tiling scheme based on quadtrees;
Figure 3 shows a representation of a 3D tiling scheme;
Figure 4 shows a schematic representation of the functionality provided by tensor query language;
Figure 5 shows alternative tiling schemes;
Figure 6 shows hierarchical hexagonal tiling schemes;
Figure 7 shows TensorLocation Fabric;
Figure 8 shows a representation of a TensorLocation Channel system;
Figure 9 shows a location verification process;
Figure 10 shows TensorCell sets in 2D;
Figure 11 shows a map with overlapping locations;
Figure 12 shows a schematic diagram of the structure of a TensorLocation Database;
Figure 13 shows a Category which is a collection of objects related by a set of morphisms;
Figure 14 shows a schematic diagram of a Functor;
Figure 15 shows a diagram of a deployment model;
Figure 16 shows an overview of the process for accessing multi-access edge computing (MEC) services by a probe client;
Figure 17 shows a schematic diagram of the TensorLocation claim of presence;
Figure 18 shows a schematic diagram of the TensorLocation object recognition process;
Figure 19 shows steps required to enable a smart store in TensorLocation;
Figure 20 shows an example of IoT sensor data transactions on TensorLocation;
Figure 21 shows an example of cooperative mapping;
Figure 22 shows an example of cooperative mobility;
Figures 23a and 23b show examples of a cooperative mapping dangerous curve application;
Figure 24 shows an example of private mapping;
Figure 25 shows an example of a computer program product
Figure 26 shows an example of a data structure;
Figure 27 shows main components of a TensorLocation system; and,
Figure 28 shows a schematic representation of an apparatus.

### DETAILED DESCRIPTION

Existing location systems are built on a set of key design principles based on the Mercator 16th century assumptions: a rigid and static geocoding system; Z dimension (altitude) and time not intrinsically part of the geolocation system; and a library which may allow 'matching' physical objects to the underlying location reference not intrinsically included as part of the location system itself.

To be ready for a set of use cases for a 'machine-to-machine' autonomous world, rather than attempt to incrementally improve existing approaches, it is necessary to profoundly innovate and establish a new fundamental atomic building block as the basis for a new location system: the 'TensorCell', which may also be referred to as a 'cell' which relates to a portion of an environment, where the environment can be divided into any number of distinct cells.

A central platform cannot serve the large number of autonomous objects (e.g., vehicles) given the highly dynamic high-definition map they require. There are emerging trends that may enable a better solution, including edge computing, federated learning, and distributed ledger technology.

Edge computing enables low latency mapping suitable for automotive use cases by bringing the processing and storage of the map closer to vehicles. Federated learning enables sharing, reduces data rate requirements and favors privacy. Distributed ledger technology (DLT) enables trust, incentives for participation and cooperative autonomous driving use cases.

Ad-hoc development of a solution on top of these technologies would be too costly for almost any organization. TensorLocation, which is built on the concept of TensorCells, presents an architectural solution template that is easy to onboard. TensorLocation is a framework for TensorCells that enables users to deploy an application at the edge (e.g., Multi Access Edge Computing (MEC)) based on new SDKs (Software Development Kits) that expose high performance, low latency data storage; a map inference engine based on federated learning; and consensus services for sharing and cooperation on the road.

TensorLocation is a next generation Location as a System that can operate on top of edge computing, federated learning and distributed ledger technology. At a high level, a TensorLocation is a new framework that allows the easy manipulation of TensorCells, which are a representation of a user driven semantic 2D or 3D segmentation of 'space - time'.

TensorLocation can involve an ecosystem of:
- Telecom providers (e.g. providing MEC);
- Big enterprises (e.g. OEMs/car manufacturers, T&L etc.);
- Location Based Services (LBS) providers such as HERE Technologies, as a neutral enabler providing the platform.

Specifically, a TensorCell representation can have the following characteristic elements:
a) Crypto coordinates identifying a spatial location. The location for a particular cell has a range covering a particular geographical extent within an environment, where the range could be either 2-dimensional or 3-dimensional.
b) A time range of validity. This time range is an example of predetermined validity-time-interval that may last any number of seconds, minutes, hours or days etc.
c) Metadata describing executable behavior or if the TensorCell is part of a set of groups.
d) An executable or programmable kernel (that is, what the cell does in response to a specified set of events) including all relevant event slots. The Executable kernel may be executable code instructions that can operate on semantic location data to provide time-valid (in accordance with the time range of validity) location-based information.
e) Networks of other TensorCells as providers / consumers
f) Semantic relationships (which can be called semantic location data, that is relevant to the location):
   a. Supporting higher level static feature type classes (e.g., a road, a building, or other infrastructure for example) and any dynamic situational feature (such as a traffic accident scene, for example)
   b. Basic set theoretic relationships such as contains, belong to, etc.
   c. User defined relationships.

For use cases in which the system is operated by a single stakeholder, the semantic location data could be based on an ad-hoc category system (e.g., type: product:: beverage::alcoholic::beer). In systems with multiple parties the semantic location data might instead be based on an open domain ontology (e.g. Schema.org) for discoverability and interoperability purposes.

The executable kernel can be executed by a computing device, which in some examples may be an edge computing device, such as mobile edge computing device, although the edge computing device can also be a fixed edge computing device in other examples. Generally, the computing device that executes the executable kernel will be proximal to the location in order to maintain low latency in communicating information with devices contained within the location. The devices within the location can be known client devices, and can be any form of user device or user equipment and may be either fixed or mobile devices.

An MEC-level dynamic map is a high performance geo-spatial-temporal engine that handles storage and processing of TensorCells. Map inference engines can expose federated learning as a service enabling better models at the vehicle-level without sharing too much raw data; stores and runs neural models for inferencing at the MEC-level to maintain the MEC-level dynamic map.

DLT/Consensus services provide Byzantine fault tolerant transactions and consensus as a service to enable use cases that require DLT. It is not realistic to expect uninterrupted communication between a vehicle and the MEC provider due to bad signal coverage in certain areas or intermittent disruptions in the network. A fault tolerant communication is needed to keep track of data transactions. Smart contracts can trigger modifications on the dynamic map based on transactions from vehicles.

One possible consensus service is location verification. Use cases of TensorLocation could be vulnerable to fraud attacks if the location reported by a 3rd party is trusted without validation. With the advances in 5G positioning and that capability becoming available via the Location API at MEC-level, it will be possible to get location validation at MEC-level from the mobile network operator. Instead of using the location from the mobile network operator, a more privacy-preserving solution could be achieved by obtaining the location from the vehicle and validating it via the mobile operator. Even though location verification can be considered as a use case for TensorLocation, it is a basic building block that can power trusted applications on the TensorLocation platform.

At very high level a TensorLocation can be considered as a Location Intelligence enabling system that:
1. Provides a Geohash based 2D and/or 3D grid representation of the physical world (such as may be partitioned into TensorCells);
2. Provides a 'quasi-real-time' mapping physical objects and dynamic situations into the supporting TensorCells;
3. Provides a set of TensorCell operators (algebra) which allows TensorCell manipulation and personalization;
4. Reverses the traditional 'location' paradigm from being 'map centric' ('the same location system for everyone' so a user needs to understand the map and find the best way to fit in to the system) to a 'user centric' platform ('everyone has their own location system' so the 'location system' a user is using is configured to take into account that user's needs, use cases and characteristics). This means that, besides the 'public' content visible to everyone (e.g. the current user is currently in Invalidenstrasse 116 [or any other location]), TensorLocation naturally allows to manage and convey contextual and personalized location intelligence information (e.g. if a user is a courier close to InvalidenStrasse it provides a reminder of the number of parcels the user/courier needs to deliver before 10am, for example)
5. Allows high degree of horizontal scale out and parallelism: the TensorCells can be federated but fully decoupled.

Before considering the technology blueprint in detail for TensorLocation it may be valuable to also outline some of its characteristics and profound novelties at a high level:
- TensorLocation is not just a new geolocation system but it is inherently a new space-time reference enabling system: in TensorLocation space and time have same level of 'dignity' and same set of enabling operators. Everything in TensorLocation is dynamic and streaming by default. As an analogy, it is possible to consider that a classical geolocation system compares with TensorLocation as classical Newton physics compares with Einstein's relativistic theory.
- TensorLocation is a federated peer-to-peer network. Moreover, every cell need not be just a flat segmentation of the physical world but is an executable unit that may react through some custom logic (comparable to blockchain 'smart contracts', as an analogy) in front of a set of events. This can unleash an essentially infinite number of possibilities for different applications especially in the IoT (Internet of Things) space.

- With an enabling frame such as TensorLocation it can become quite natural to develop a digital twins model. In fact, one of the major challenges in digital twin development concerns the synchronization of the static content of the model with its dynamic behavior, which can be taken into account by TensorLocation and made transparent to the user.
- At a high level it is possible to consider TensorLocation as a system that allows a simple algebra across TensorCells with built-in spatiotemporal and semantic operators and transformers.
- In the same way, in TensorLocation everything can be private and personal by default. This is different from existing location systems where the location content is general and public and a user may have the ability to insert a 'private layer' with all the related difficulties to maintain cross-referencing and consistency, whereas in TensorLocation every user can have their own personal and private TensorLocation network with automatic and native consistency checks and continuous cross referencing validation with 'ground truth' (such as a confidence indicator dynamic value).
- TensorLocation enables trusted positioning down to the micro level allowing agents to move in time and space and have bi-directional operation with cells and other agents.
- TensorLocation does not have a server centric architecture (as do the traditional location systems) but instead is highly federated, consistent with the role of edge computing. This provides various advantages, such as:
   o System scalability and easy sharing mechanisms
   o The exchanged 'bits' of information need no longer be raw sensor data (as it is the case in existing location systems, with the server required to centrally transform massive amount of sensor data into location content) but rather 'neural models quantum' shared across the federated network and combined through TensorCell tensor algebra operations.

### Intelligent Micro Elements

The TensorCell is an atomic unit that represents a user-driven semantic 2D or 3D segmentation of the "space & time". TensorLocation protocols can divide an entire environment into a grid of cells, and every cell can have a unique 2D or 3D Geohash address. Due to their hierarchical nature, cells inherently provide a division capability. In order to contribute to a 'Location as a System' vision, these cells must become intelligent.

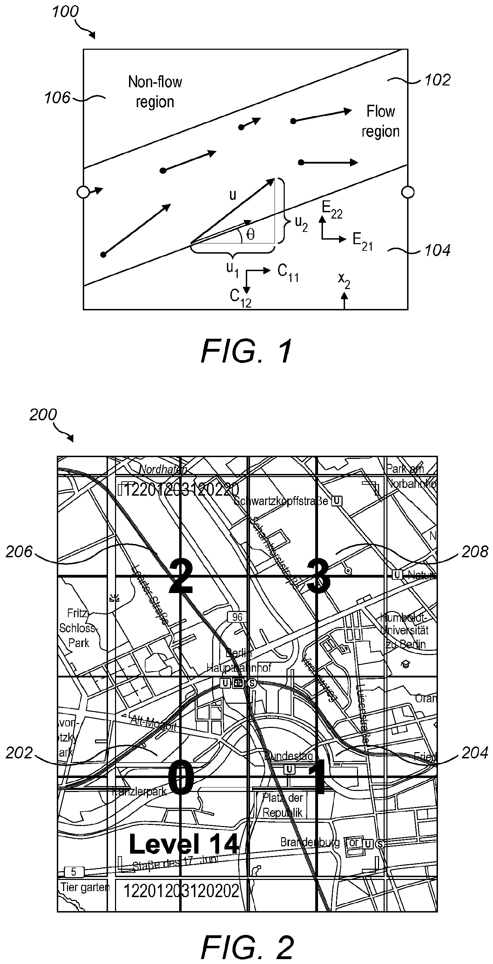

Figure 1 shows a schematic representation of a plan view 100 of a TensorCell. Part of the TensorCell shows a flow region 102 in which vehicular traffic is moving, while other parts 104, 106 are non-flow regions.

A TensorCell is a structure that can be built on top of a 2D or 3D Geohash index. TensorLocation is a multi-tenancy system allowing users to define the behavior of the TensorCells. A TensorCell can support attaching a user defined Protocol Buffer (e.g. Proto3) schema to describe data. Decentralized blockchain based storage can enable storing actual data assigned to a TensorCell near the location that the cell index represents, which can reduce the latency of data and network input/output. In order to allow purging of sensitive information, actual data need never be written into the blocks of the chain, only referenceable hashes. The temporal state can be represented by three timestamps. Two timestamps may represent the timeframe of validity, and a third could represent the time of occurrence (observation). This will allow for more flexibility and control when working with TensorCell data.

### Geohash

Geohash can be used as a basis for TensorLocation because of its conceptual and mathematical simplicity. Another benefit of the Geohash standard is that it is in the public domain. Geohash encodes a geographic location into a short string of letters and digits. It is a hierarchical spatial data structure which subdivides space into buckets of grid shape. Geohashes offer properties like arbitrary precision, similar prefixes for nearby positions, and the possibility of gradually removing characters from the end of the code to reduce its size (and gradually lose precision).

Geohashes are usually used to represent a location in a flat 2D world. However, this does not necessarily suit all use cases of TensorLocation and introduction of 3D Geohash may be needed in some situations (although a two-dimension TensorLocation system can also be used).

A theoretically correct approach to incorporate altitude / depth into the Geohash could be to modify the Geohash encoding and decoding algorithms to incorporate altitude directly into the Geohash string, so it becomes a 3D Geohash. But, given that TensorLocation must be able to operate the nearby locations by using different length Geohashes, simply adding altitude will not work. The 3D cells may advantageously have equal lengths in all dimensions X, Y, Z proportional to the Geohash length. So, the Z dimension value can be rounded to the same precision as X and Y dimension values. Z dimension value can be signed, so that altitude above and below sea levels could be represented.

Geohash can be a fundamental element in TensorLocation. It can become an identifier of the objects in the TensorLocation allowing querying any event and object stored on and off chain.

Since Geohashes are intrinsically hierarchical, it also means that a transaction referencing a static object, and a transaction referencing moving object located within same location, automatically have a spatial relationship.

### Map Tiles

Figure 2 shows a map tiling scheme 200 which is based on quadtrees. A quadtree is a tree data structure in which each internal node has exactly four children. Quadtrees partition a two-dimensional space by recursively subdividing it into four tiles. The child tiles are numbered 0-3 in a fixed reverse "Z" pattern:
- Tile 0 is the southwest sub-tile 202,
- Tile 1 is the southeast sub-tile 204,
- Tile 2 is the northwest sub-tile 206,
- Tile 3 is the northeast sub-tile 208.

Each tile in the map has an identifier called a Tile ID. A Tile ID may be e.g. a 64-bit unsigned integer computed from the tile's quadkey. A quadkey is a string of numbers (0-3) which captures the hierarchy of parent-child tiles from level 1 to the target tile level.

For example, for a level 5 tile containing San Francisco, the quadkey would be 02123 when the parent tile is 0212 and the child tile containing San Francisco is number 3.

Map tiles and Tile IDs can be leveraged to bring map content to TensorLocation, for example to link road topology to a TensorCell. In order to do this, the TensorCell hash (its X and Y dimensions) can be converted into a Tile ID. By using the resulting Tile ID, TensorLocation can access associated map content.

Conversion is done by reverse calculating longitude and latitude from Geohash and then using a suitable formula to calculate the corresponding Tile ID. Such calculation can be expensive, therefore a static conversion tables can be calculated, so Geohash to Tile ID conversion will have constant complexity O(1).

Alternatively, 3D TensorLocation may rely on an extension of the map tiling scheme to 3D by adding the altitude dimension, which can be reported by GNSS devices as the elevation with respect to the WGS-84 ellipsoid. Similar methods work for converting a longitude-latitude-altitude tuple to a TensorCell identifier by using an octkey instead of a quadkey. Conversion between the 3D TensorCell IDs to Tile IDs is a simple operation of clipping and joining bits.

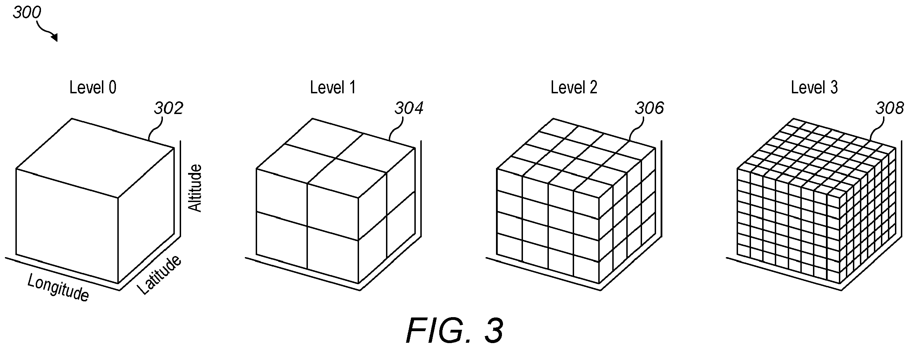

Figure 3 shows a representation of a 3D tiling scheme 300. The scheme 300 shows four different levels, in which: level 0 302 has a single 3D tile; level 1 304 has 8 3D tiles; level 2 306 has 64 3D tiles; and level 3 308 has 512 3D tiles. Thereby, as the levels increase in number a more precise positioning within the same volume can be provided.

RPC (Remote Procedure Calls) based services, such as gRPC based services, can be assigned to a TensorCell to make the cell intelligent. Users may be able to configure the deployment policy to have multiple instances running in different locations (e.g. MECs [Multi-access Edge Computing systems]) to reduce latency or have a location specific configuration.

TensorLocation can provide a tensor query language (e.g. graphQL based language) to enable complete and human readable description of the data to be queried from the TensorCells:
- TensorCells specific data
- Data about static and dynamic objects within the concrete cell or set of cells
- Location specific queries
- User specific queries

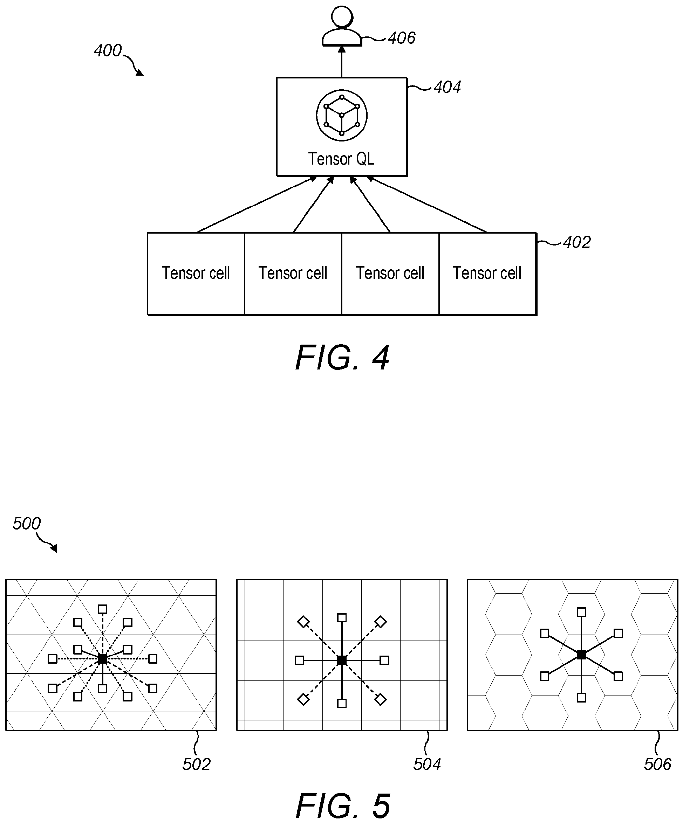

Figure 4 shows a schematic representation 400 of the functionality provided by tensor query language. A group of four TensorCells 402, when interrogated, provide information to a server 404 running the tensor query language. The server 404 can then readily provide the human readable description to a human user 406.

TensorLocation can utilize Multi-Access Edge Computing (MEC) technology having MEC centers to manage TensorCells that are under the MEC coverage zone. MEC devices (which are co-located with communication antennae) use computing clusters at the edge of a network and have a direct connection (with no IP routing hops) to exchange data between client and server, as opposed to cloud systems where information may travel large distances through multiple nodes for processing. In other words, data associated with each TensorCell may be stored and processed by an edge node located in, or close to, the geographical area associated with the TensorCell.

Providing TensorLocation using MEC devices (i.e. storing and processing data relating to a particular TensorCell at an MEC device located in, or close to, the geographic area associated with the TensorCell) can therefore bring many benefits in terms of decentralization and speed (because of low latency). It may also be possible to choose a geo indexing system based on a hexagonal tiling system to greatly reduce the complexity of the required algorithms.

Figure 5 shows alternative tiling schemes 500, including a triangular tiling system 502, a square tiling system 504 and a hexagonal tiling system 506. The lines between different cells in each grid of tiles represent the distances between midpoints of adjacent cells. The triangular tiling system 502 has three distances, the square tiling system 504 has two distances, and the hexagonal tiling system has a single distance. This property of the hexagonal tiling system makes it useful in situations such as routing in straight lines from one cell to the next.

Examples of 2D tiling schemes include HERE Map Tile API (which uses map tiles to form a complete map of the world using the Mercator Projection), OpenStreetMap tiles, and Uber H3 (which uses hexagonal, hierarchical indices). However, tiling can be performed with any method that decomposes two- or three-dimensional space and assigns a unique identifier to each division. 3D tiling schemes may use cubes, rhombic dodecahedral honeycombs, or any other shapes/lattice (regular or irregular).

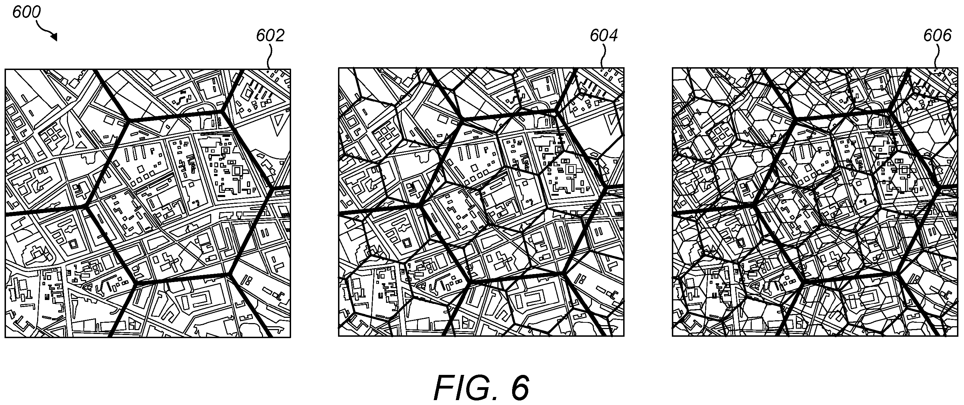

Figure 6 shows hierarchical hexagonal tiling schemes 600, including a first system 602 as a first, coarsest, hierarchical level, a second system 604 at a second, intermediate, hierarchical level, and a third system 606 at a third, finest, hierarchical level.

### TensorLocation implementation

In this section the major technology views and related components that are part of a TensorLocation implementation are described.

TensorLocation Fabric plays a central role in providing the major components for TensorLocation to work.

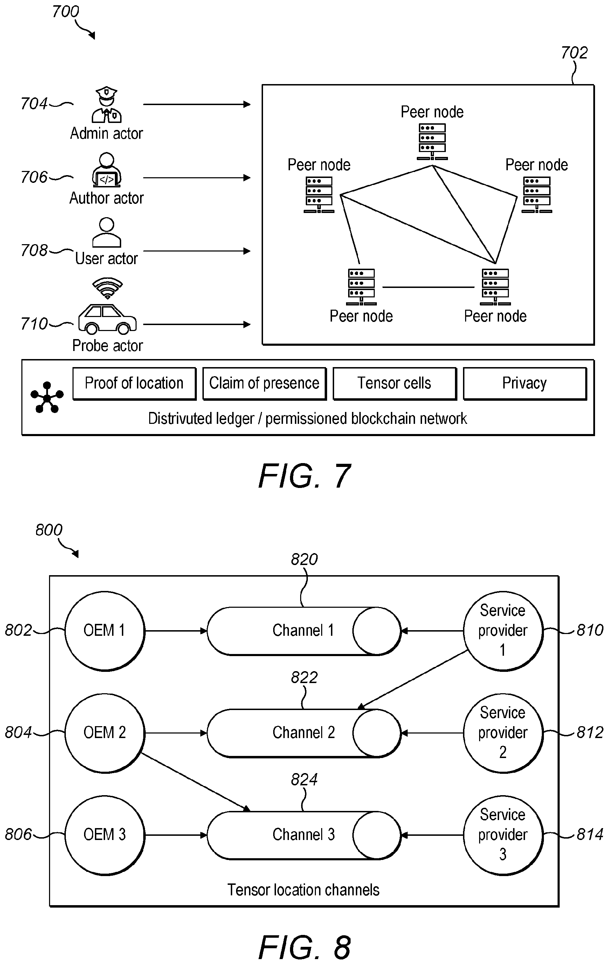

Figure 7 shows the TensorLocation Fabric 700, which is a distributed system in which:
a) A set of peer nodes 702 collaborates along a predefined fabric protocol
b) The fabric protocol ensures a constant synchronization and hand-shaking among federated collaborating nodes and provides a consensus mechanism to resolve 'quasi real time' conflicts across nodes (see below discussion for further details)
c) The peer node may have various types of specializations (a single compute node may play several functions at the same time). The key specializations for a peer node may be:
   a) Validators: the role of validators is to contribute across the p2p network and validate any 'transaction' happening on behalf of the actors
   b) Data custodian. the role of this class of nodes is to guarantee data consistency, powerful and secure storage mechanisms and to ensure the appropriate data proximity to satisfy stringent latency requirements
   c) Makers: nodes that participate in the various phases of the lifecycle of a TensorCell and ultimately the lifecycle to what can today qualify as a map. More specifically, there can be:
      i. Detectors: nodes that detect changes in the physical world, generally subscribed and listening to 'probe actors' e.g. devices providing probe data;
      ii. Aggregators: nodes that have the task to aggregate various observations into a set of features and situational events connected to the TensorCells;
      iii. Aligners: nodes that have the task to align and reference all the various TensorCells producing an always 'eventually consistent' set of manifolds.
      iv. Publishers: nodes that have the task to publish the aggregate according to various formats and according to various 'user defined' publishing rules and schedules
   d) Three major actors interact with the fabric:
      1. Admin actor 704: typically a human actor who can set up permissions, network access and boundaries, administrative privileges, node behavior, etc.
      2. Author actor 706: typically a human who can access the TensorLocation fabric to access information, monitor, define logics, define 'user specified' entities, etc.
      3. Probe actor 708: typically a device or a machine that is subscribed to the fabric and constantly alert for any changes. Essentially, probe actors are 'authorized' entities that tell the TensorCell about changes for features (static, dynamic, user defined, etc.) that are linked to the TensorCell. Typical probe actors can include: IOT devices, smartphones, sensors, satellites, cameras, sensor equipped vehicles (e.g. newer personal/fleet vehicles, semiautonomous vehicles, autonomous vehicles, HERE True car), aerial/terrestrial drones etc.. It is important to appreciate that the input coming from probe actors can be validated through the TensorLocation consensus mechanism (see below)
      4. User actor 710: typically a human or a machine interacting with the TensorLocation and depending on their credential will get their own context and set of capabilities.

### Federated Communication Protocol

The TensorLocation communication protocol may provide many capabilities including bidirectional streaming, flow control, and multiplexing requests over a single connection. Importantly, it is physical and transport layer agnostic, thereby enabling pluggability and scalability of the network.

TensorLocation can utilize enterprise grade blockchain implementations. Since target users for TensorLocation include big enterprises (such as vehicle manufacturers) that operate with private data, a permissioned blockchain is highly suitable for these applications.

Blockchain can bring the following benefits to TensorLocation and its users:
1. Decentralized: Instead of being stored in any one single point, the blockchain system is entirely decentralized.
2. Security / immutability: Once every block is sealed cryptographically, it is impossible to copy, delete, or edit, ensuring the immutability. On top of this, every transaction needs the digital signature through both private and public keys that utilize different cryptographic schemes.
3. Trust: Organizations sharing the same goal but do not necessarily trust each other can safely collaborate.
4. Transparency: It is possible for users to verify and track transactions. An individual with access can view the entire record of transactions.

### TensorLocation Channels

Figure 8 shows a representation of a TensorLocation Channel system 800. As TensorLocation is a distributed system it may involve multiple organizations 802, 804, 806 running their applications on the same infrastructure. There are cases when organizations need to keep their logic and data private revealing these only to the trusted subset of counterparties 810, 812, 814. For that matter, TensorLocation can introduce the notion of channels 820, 822, 824 that allow users of TensorLocation to privately cooperate. A TensorLocation channel is a private "subnet" of communications between two or more specific network members for the purpose of conducting private and confidential transactions. Transactions and ledgers are segregated, running on top of the single TensorCell grid. This allows associating multiple TensorLocation Crypto Coordinates (cryptographically encoded addresses as described in more detail below) for the events and object within a single or set of TensorCells without revealing sensitive information.

### Decentralized Location Verification solution

A decentralized location verification system can be designed as an open standard that allows qualifying participants to become their own service providers. It is possible to base the TensorLocation protocol on a Blockchain powered framework. The TensorLocation protocol can be physical and transport layer agnostic (GPS, 5G, Device-Free, LPWAN, etc.) to enable pluggability and scalability of the fabric. Like Bitcoin, Ethereum and other blockchains systems that involve "miners" to run and operate network, crypto-economic incentives may be possible to grow distributed location verification systems and markets.

### Blockchain Consensus Algorithms: a short background

Byzantine Consensus protocols are often structured in a sequence of rounds or epochs where participants propose and agree upon values in a sequence of epochs. Participants receive a sequence of state-changing requests from clients, participants must propagate the effect of requests to each other, and the entire set of the right participants must come to agreement on the values and provide feedback back to the clients.

At high level, any consensus protocol can exhibit the following four properties:
- Validator set
- Validator weight
- Validator criteria
- Validation verifiability

Today there are two main consensus algorithms frequently used: Proof of Work and Proof of Stake. Proof of Work has an unknown number of validators, but validator weight is known (e.g. hash-power). Validation criteria is simple to check if the calculated block-hash meets the required difficulty. The verifiability requirement is to have a chain synced, since without it there can be no guarantee that the new block is valid in the chain. Proof of Stake has a known validator set; the 'validator staker' must be known by their public key and deposit amount before they can participate in the protocol, and the protocol itself governs validator weight through the maximum total stake metric. The validator criteria are to have enough stake to participate and perform the staking process by signing, and being accepted into the validator set. The validation verifiability, like in Proof of Work, is mainly having the chain synced, as otherwise there is no way to know how much a validator has staked or whether they are even in the set of accepted validators.

In the context of TensorLocation the location of the cells and true physical location of the objects within these cells plays a key role. Proof of Work or Proof of Stake require only a communication channel to conduct validation, physical location is irrelevant. Therefore, there is the need to introduce a new "Proof of Location" consensus mechanism.

### TensorLocation Smart contracts

A smart contract is a piece of code that can be written in one of the popular languages such as Go or Node.JS and implements required logic. It can be installed and instantiated on the TensorLocation network within a channel and allows interaction with that channel shared ledger.

A purpose of the TensorLocation Smart contracts is to provide a framework that allows creating and managing TensorLocation Crypto Coordinates. TensorLocation Smart contracts are linked to the TensorCells within the channel it runs in. The benefit of the TensorLocation Smart contracts includes the ability to deploy as a standalone service, so it can be highly distributed and highly resilient.

TensorLocation Smart contracts behave as a programmable payload of the TensorCells and can represent any event associated with the cell through TensorLocation Crypto Coordinates.

### Location verification protocol (Proof of Location)

There is a long history of positioning with cellular mobile radio technologies. Different technologies (from 1G to 5G) can employ different techniques (e.g., Angle-of-Arrival, Time-of-Arrival, Time-Difference-of-Arrival etc.) and achieve different KPIs such as latency, accuracy and cost.

5G presents a unique opportunity to achieve low cost, highly accurate localization due to some aspects that it introduces such as massive MIMO, network densification, beamforming, device-to-device networking. Positioning is built into 5G standardization process unlike previous cases, where it was introduced as an afterthought. Industry is actively working on 5G positioning, engages in 3GPP standardization efforts and reports latest results.

Given the capability that a mobile network operator (MNO) can position a subscribed user equipment with certain quality metrics, privacy concerns have become even more relevant. Any business solution that involves data sharing needs to maintain privacy and security. In order to solve the proof-of-location problem, it is possible to leverage the positioning capabilities of MNOs.

At a high level, a proposed solution involves three stakeholders:
- Probe Actor: the entity whose location is to be verified,
- MEC Validator 1: the entity that receives the location of the probe actor, as reported by the actor itself, and wants to prove its location,
- MEC Validator 2: the entity that can position the probe actor passively (e.g., an MNO that the probe actor is subscribed to).

These solutions address two types of problems:
A. Secure Multi Party Location Verification: This verifies that two parties agree on the location of a probe actor.
B. Secure Multi Party Location Fusion: This is an extension to the above technique which computes a fused location considering knowledge from both parties.

Proof of Location provides the same four consensus properties as blockchain, but because the problem is more heavily constrained by physics, the implementation of those properties is different. Every TensorCell is related to a set of authorized and trusted validators that cover a physical spatial area (e.g., mobile network operator, wireless network provider, etc.). For a given area the validator set is a list of authorities that share the same geospatial zone. Numbers of such validators may be different for the various areas (e.g., middle of ocean vs. city). Validator weight depends on the scale, coverage, number of nodes (such as mobile network operator vs. local internet provider). Since time is also a very critical dimension in TensorLocation, validator criteria are defined by having a signature by the validator with a biggest weight in the area of interest. Validation verifiability is to ensure that an object is physically present in the area covered by the signing validator(s). For example, a mobile device physically connected to a set of base stations covering that specific area where device is residing.

An example of a validator is a 5G Base Station Controller (BSC) that controls multiple antennas within an area of hundreds of square meters. This controller is capable of precisely positioning 5G enabled devices (vehicle, cell phone, smart watch, etc.) using 5G radio signal characteristics and to "sign-off" this. Having multiple independent BSC/s validating and signing the position of the same device gives strong guarantees that this device is indeed in the reported position.

Proof of Location requires Byzantine Fault Tolerance, which means it can withstand up to a third of system-wide faulty or malicious nodes and still follow the protocol correctly. Providing consensus on whether an event or agent is verifiable at certain point in space and time by issuing cryptographically signed and authenticated certificates that can be called "claim of presence". Claim of presence is 'first class citizen' smart contract that contains the following fields:
- Reference to the TensorCell;
- Reference/Hash to the block with valid claim of presence;
- Reference to the Authority that issued claim of presence.

More generally, the computing device that executes the executable kernel can generate a signed certificate that contains the time-valid location-based information for a particular cell, where the time-valid location-based information may relate to any information relevant to the cell, including, or not including, a claim of presence. For the signed certificate to be authenticated (or equivalently 'validated') then execution of the executable kernel must be performed by another, different computing device, that can independently verify the validity of the signed certificate by determining validation information and then checking that the validation information matches the signed certificate to within at least a predetermined threshold. These two computing devices may be referred to as a first device and a second device to avoid confusion, without 'first' and 'second' implying any particular characteristics of either device. One or both of these computing devices may be an edge computing device.

Claim of presence acts as an evidence that an entity is in certain location. This data is used by any computational engine capable of verifying that this claim of presence is authentic and well-formed. Before calling any TensorCell programmable payload, a verified claim of presence can be presented. Examples relevant to a claim of presence require that the semantic location data includes presence data that represents an indication that a client device is present within the location of the cell. Then the signed certificate is also representative of the indication of presence of the client device. Validation information generated by a second computing device, such as a second MEC, includes a second indication of the presence of the same client device within the location. The validation information can be said to match the signed certificate when the first and second indications of presence overlap to an extent that they satisfy an overlap criterion. Such an overlap criterion may be probability that client device is present at the location of at least a specific numerical value, such as 95%, or any other appropriate percentage. When this overlap criterion is satisfied then signed certificate can be validated to create a validate/authenticated signed certificate.

When the authenticated signed certificate indicates that the relevant client device is present in the location then that client device may be granted access to information that is relevant to the cell corresponding to the location. This access may be read only access or may extend to both read and write access. In some examples the access granted may enable the client device to communicate with one or more other client devices that are also certified to be present within the same location.

The blockchain based 'proof of location' consensus protocol with its related 'claim of presence' smart contract can be of key importance in the TensorLocation architecture:
- It allows an easy but strongly reliable auditable process to plug various data sources (probe actors) which contribute to the TensorCell content update;
- It guarantees a highest level of built-in privacy as well as system reliability in case of failure of some computing nodes;
- It opens a door for 'micro-incentivization' across multiple users that are part of TensorLocation ecosystem.

More generally, a blockchain running on an edge computing network can include a smart contract that records any information relevant to any TensorCell present in the TensorLocation, that is, the smart contract may contain the time-valid location-based information derived from the semantic location data relevant to any TensorCell. A second computing device running on the edge computing network can then validate/authenticate the smart contract to write a validated smart contract into the blockchain. It will be appreciated that while the edge computing network is referred to as such above, this network may also contain other computing devices that may not be edge computing devices alongside those computing devices that are edge computing devices, such as MECs.

The validated smart contract may provide for many different functionalities such as, but not limited to, providing the time-valid location-based information to any particular TensorCell or to any object or client device present in any particular TensorCell.

### Secure Multi Party Location Verification

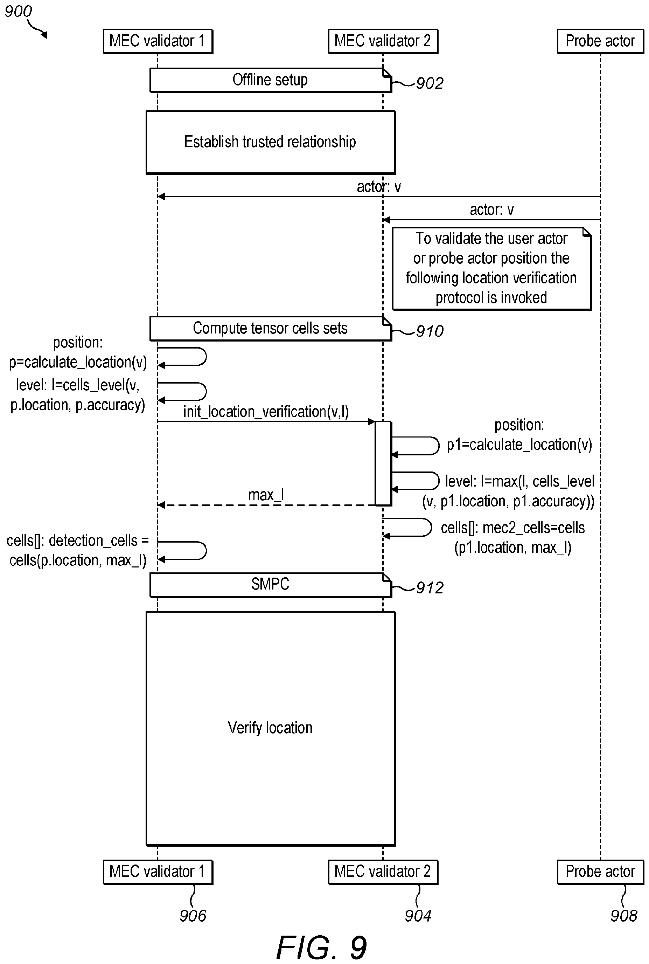

Figure 9 shows a location verification process 900, which is composed of three stages:
1. Offline setup 902: in this phase MEC Validator 2 904 establishes a trusted relationship with MEC Validator 1 906 by exchanging certificates, recording a transaction on the blockchain, by defining the relationship as trusted on the Smart Contract or the like. Next stages happen repeatedly whenever there is a need to verify the location of a probe actor 908.
2. Computing TensorCell sets 910: both validators compute the TensorCell sets that they think the probe actor is in by using position and positioning accuracy and agreeing on the level of the cells.
3. Secure Multi Party Computation 912: MEC Validator 1 906 and MEC Validator 2 904 verify the location based upon the signal received via MEC Validator 1 906 and the position estimate performed by the MEC Validator 2 904.

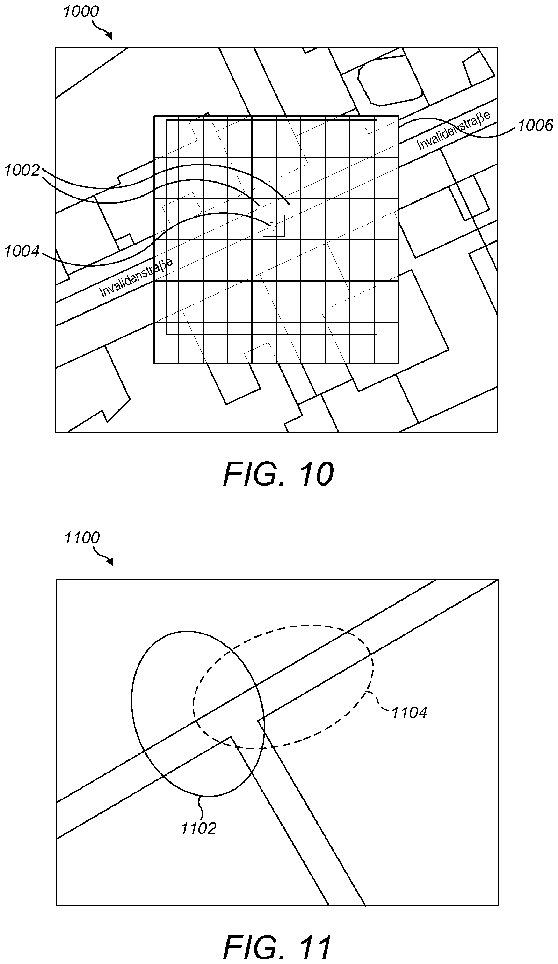

Figure 10 shows TensorCell sets 1000 (in 2D) from the two Validators of figure 9. The two cells 1002 derived from the probe actor's location 1004 intersects fully with the cell set computed by Validator 2 1006.

### Location Data Fusion

Figure 11 shows a map 1100 with a pair of ellipses representing a first location 1102 of a probe actor known by the MEC Validator 1 906 (e.g. reported by the probe actor device) and a second location 1104 of the probe actor known by MEC Validator 2 904 (e.g. determined using network-based positioning from cell antennae). The size and shape of the ellipses represents the uncertainty associated with the locations. Knowing the accuracies of each positioning source, a fused location can be derived by combining the location information. This fused location may provide an improved estimate of the actual location of the probe actor.

### Data model and Data representation

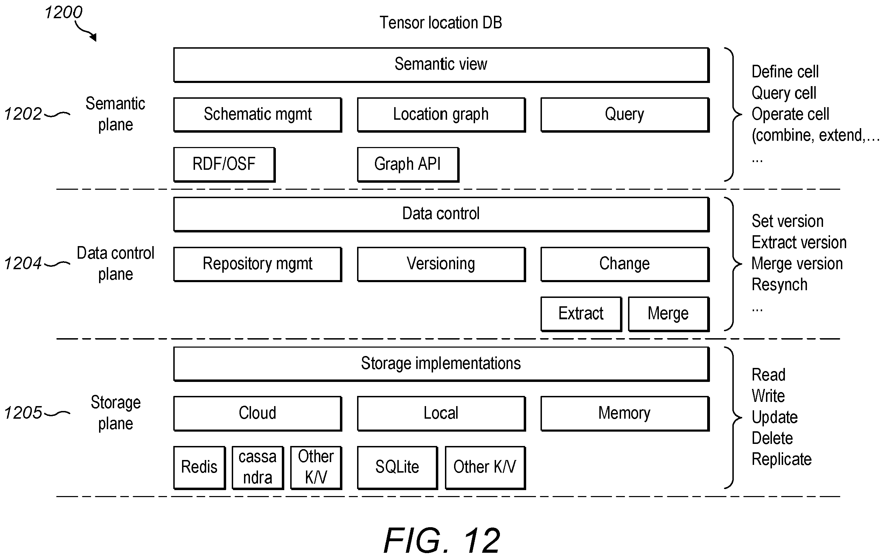

Figure 12 show a schematic diagram of the structure of a TensorLocation Database 1200. The success of TensorLocation is connected to the flexibility and openness of its underlying data model and data representation mechanisms. TensorLocation can be based on a highly distributed database logically composed of three decoupled layers:
1. Storage plane 1202
   o This "plane" would be mostly devoted to the physical storage of the data, taking into account appropriate mechanisms for replication, access to multiple storage devices (e.g., cloud, local, in memory, etc.). It is up to this plane to adopt the best replication and streaming techniques (e.g. GPU acceleration) to ensure the desired response times. It will also expose a consistent API layer into a Data Control Plane.
2. Data Control plane 1204
   o The Data Control Plane primary mission is to maintain an appropriate level of consistency across the "map" represented by set of TensorCells. More specifically the Data Control Plane will be responsible for version management and data change management. In terms of data change management this plane can enable an easy integration across multiple TensorLocation CI/CD pipelines where a subset of features can be extracted, manipulated locally and then merged back into the overall map. (As an analogy, it is possible to consider the current GitHub versioning and code merge capabilities expanded into a location content set of domains.)
3. Semantic plane 1206
   o The semantic plane can manage the lifecycle of semantic relationships across various elements (e.g. Location Graph) and it will allow accessibility and queries across semantic entities.

### TensorLocation and Category Theory (algebra for TensorLocation)

It can be very advantageous to base the entire TensorLocation fabric on top of a very well-established mathematical foundation that would not only increase the robustness of the entire approach, but would also facilitate the development of powerful, extensible and generalizable TensorLocation operators.

In particular, Category Theory can used as underlying "modeling language" for TensorLocation. Category Theory is an abstract and powerful mathematical framework (a superset across set theory, group theory, geometry, topology, and other diverse areas of mathematics) that makes it possible to represent relationships between mathematical objects.

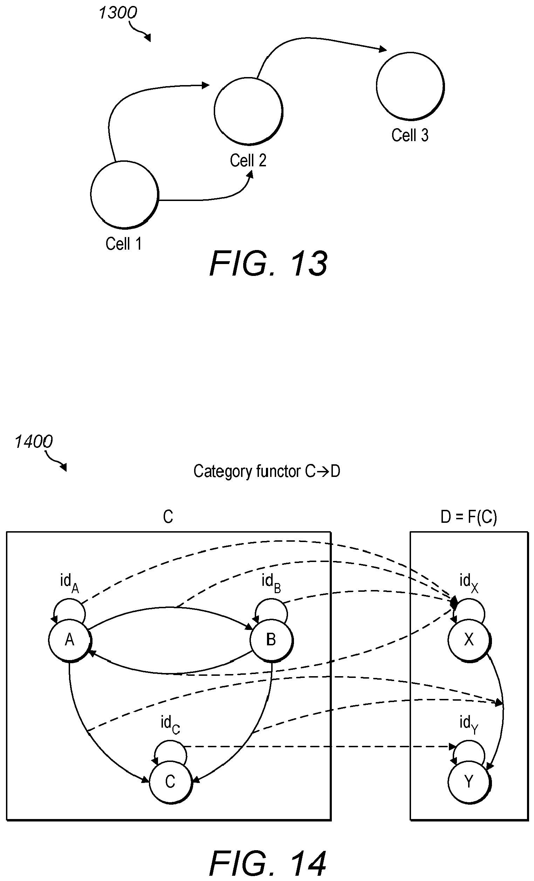

Figure 13 shows a Category 1300 which is a collection of objects related by a set of arrows (morphisms).

A category also needs to have a 'composition' operator which is associative and it must also have the 'identity' element. Objects and arrows can represent virtually any sort of relationship between elements. Another important notion is related to transformation across categories.

Figure 14 shows a schematic diagram 1400 of a Functor that comprises transformations across categories (so they map objects and arrows).

It is possible to consider the collection of TensorCells represented as a monoidal symmetric category where:
- Objects are represented by TensorCells
- Arrows represent the 'relationships' across TensorCells (e.g. 'contained in', 'belong to', 'close-by', etc.)
- The notion of 'identity' will be represented by the empty TensorCell
- In addition, a notion of 'product' between two TensorCell will be provided by the union of the TensorCells themselves

For example, there may a first cell a second cell and a third cell. The first cell may be related to the second cell by a first mapping, which may be a first morphism. The second cell may be related to the third cell by a second mapping, which may be a second morphism. The first cell may be related to the third cell by a third mapping which may be a third morphism. Where the third mapping is a product of the first mapping with the second mapping then the third cell will be the union of the first cell with the second cell. Thus, the geographic range of the third cell with be the sum of the geographic ranges of the first and second cell.

These mathematical relationships between different respective cells can provide a convenient framework for determining what access should be granted to client devices that are authenticated as being present in a particular cell. For example, when a first client device is authenticated as being present in the first cell then the first mapping may be invoked to determined that the first client device should be given access to location data or a second device present in the second cell. Alternatively the third mapping may be invoked to determine that the first client device should be granted access to location information about either of the first or second cells that make up the third cell and/or granted access to a third client device that is located in either of the first or second cells.

In some examples the first and second cells may be coterminous such that the third cell forms a simply connected volume. Alternatively, the first and third cells may be spaced apart in such a way that they are disconnected from each other. That is, they have a space or volume interposed everywhere between them and are thus non-overlapping and non-coterminous. In such a case, providing a client device with access to information or a second client device relating to the second cell may provide a form of early warning signal that provides the first client device with information while the first device is still a safe distance away from the second cell.

In further examples there may exist an intermediate cell that is positioned between the first cell and the second cell. If a client device moves in the first cell then the client device may be given a first piece of information, such as an early warning about a hazard in the second cell, and if the client device nonetheless moves into the intermediate cell then second information may be provided to the client device that provides different functionality than the first piece of information. For example, whereas the first piece of information may be simply a warning, such as for the driver of a vehicle to slow down, the second information may instruct the vehicle (which may have an autonomous or semi-autonomous functionality) to slow down, irrespective of the driver's behavior, to avoid the hazard in the second cell.

More generally, as a client device moves along a path that navigates through a series of different cells, the client device may receive a cascade of different pieces of information, enabling a corresponding cascade of different functionalities.

This possibility to represent TensorLocation in terms of categorical properties, when fully implemented across the fabric, will introduce great flexibility and generality, avoiding much 'ad hoc' engineering and workarounds present in existing location systems. For example:
- A common and consistent set of 'algebraic operator' can work across all TensorLocation elements:
   ∘ Compare
   ∘ Add / Sum
   ∘ Subtraction (delta)
   ∘ Compose
   ∘ etc.
- An effective and generic 'naming addressing schema' across TensorLocation which can allow every user to apply its own naming convention and always refer to the right set of entities (analogous to DNS applied to TensorLocation)
- A consistent class of transformations (e.g. functors F) across TensorCells categories that would 'abstract' (aka ' categorize') a large set of typical patterns of use case:
   ∘ Segmentation: for example to restrict the model to a particular domain (e.g. a road model). TensorLocation can provide 'out of the box' a set of Functors (Transformers) that can map the TensorCell Category into corresponding well known domains such as Roads, Lanes, etc.
   ∘ Classification: build a set of Cells that have same set of characteristics/qualifiers
   ∘ Enrichments: possibly through "neural network" transformation augmentation TensorCell category with additional 'location intelligence' insight (e.g. mobility index, confidence quality scores,)
   ∘ etc.

### Deployment model

The distributed nature of TensorLocation architecture can allow a deployment model that scales well horizontally and can also allow flexible database sharing.

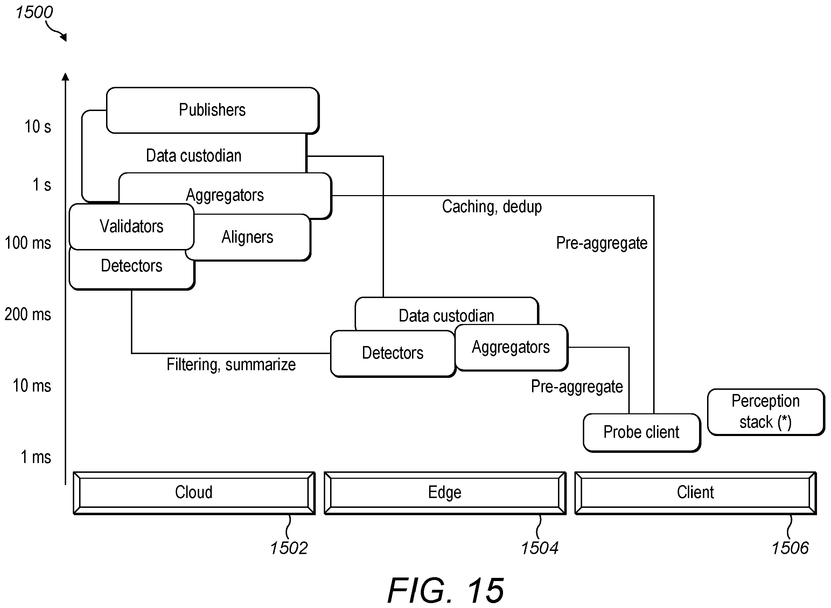

Figure 15 show a diagram of a deployment model 1500, in which there are three main tiers in TensorLocation computing model:
1. Cloud 1502: some TensorLocation components can reside in the Cloud (in a multi-cloud approach possibly leveraging application containers, e.g. Kubernetes clusters)
2. Edge 1504: some TensorLocation componentry will stay at the edge (MEC technology)
3. Client 1506: TensorLocation lightweight client agent that will run at a device/IOT endpoint level.

Ultimately, the TensorLocation deployment model can consist in deployment patterns that prescribe how to deploy the key computing units described above:
- Validators
- Data custodians
- Makers
across the three major tiers to find the best optimization across latency and computing cost. Optionally it is possible to tune the TensorLocation deployment model in order to satisfy a specific set of user requirements (for example, to prioritize a particular geographic region)

It some examples it can be assumed that:
- Validators can stay in the Cloud with the requirement to be sufficiently spread to avoid excessive latency times. They can stay in the Cloud since they need to see the entire chain.
- Data Custodian would be across Cloud and Edge; more specifically it is possible to consider the Data Custodian implementing typical storage hierarchy policies where the TensorLocation data, which is supposed to have higher change rate, will be cached at the Edge while more 'static' TensorCell would be stored in the Cloud. It is also advantageous to build a fault tolerant redundant storage infrastructure.
- Makers can be across Cloud and Edge. It can also be beneficial to consider a close form of "collaboration" across the various makers (at Cloud and Edge) in order to always have the TensorCell content fresh and reliable.
- Finally it is important to note that in TensorLocation, units such as the 'probe actor agent' can prioritize the creation and transfer of 'neural model quantum' (in a federated learning mode) rather than bulk of raw data.

### Detection model

One important task in TensorLocation is to detect with precision and low latency the position of an object (static or dynamic) that is spanning across the TensorLocation Grid system. In this section this subject is considered in detail.

Regardless of the method, the model that can be used to estimate and validate the position of an object needs to fulfil certain characteristics. These characteristics are defined based on an absolute or a relative position estimation, which can be further specialized into a horizontal position and into a vertical position. In some applications, the availability of position estimates is an additional attribute that describes the percentage of time when a positioning system is able to provide the required position data within the performance targets or requirements.
1. Position accuracy describes the closeness of the estimated position of a device (either of an absolute position or of a relative position) to its true position.
2. Speed accuracy describes the closeness of the estimated magnitude of the device's velocity to the true magnitude.
3. Bearing accuracy describes the closeness of the measured bearing of the device to its true bearing. For a moving device, the bearing is a measure of the velocity's direction and this KPI can be combined with speed accuracy into the velocity's accuracy.
4. Latency describes time elapsed between the event that triggers the determination of the position-related data and their availability at the positioning system interface.
5. Time to first fix (TFF) describes the time elapsed between the event triggering for the first time the determination of the position-related data and their availability at the positioning system interface.
6. Update rate is the rate at which the position-related data is generated by the localization system. It is the inverse of the time elapsed between two successive position-related data.
7. System scalability defines the number of devices for which the positioning system can determine the position-related data in a given time unit, and/or for a specific update rate.
8. Security and Privacy are also relevant aspects.

Today there are many technologies that fulfil these characteristics: GNSS, 3G, LTE, 5G, LPWAN, ALPS, Bluetooth, IP, WAN, LAN, etc. One of the key design principles for the TensorLocation is to be applicable to any domain and therefore it is important that Proof of Location can leverage as many technologies available as possible. This can be achieved through the mechanism of open participation that enables vendors to join the ecosystem by bringing their technology and infrastructure to become authorities for Proof of Location. The main requirements are coverage and ability to issue and validate "claim of presence". Research into new technologies will continue, and the TensorLocation system is capable of adding new types of authorities with new technologies to support evolution of the Proof of Location.

### Global Navigation Satellite System based localization

GNSS positioning (such as GPS, GALILEO, GLONASS and BEIDOU) is very common and widely used. Ordinarily, GNSS positioning is incredibly reliable; however, problems and attack vectors with this system have become increasingly evident. Civil GPS is unencrypted, it has no proof-of-origin or authentication features, and despite dire warnings in the mainstream since at least 2012, the system remains extremely susceptible to fraud, spoofing, jamming, and cyberattack.

The limitations of GNSS positioning require at least four satellites signals to be overhead, which makes indoor localization nearly impossible. Urban density and skyscrapers also cause difficulties in receiving four messages and the issue of multipath signals occurs within the vicinity of high-rise buildings also present serious limitations. Further, for a GNSS device, it can take multiple minutes to acquire an accurate coordinate. When it comes to power consumption, GNSS is a drain on battery and is not feasible for low powered IoT devices. To summarize the issues with the dependencies on GNSS in TensorLocation:
- Single point of failure
- Poor signal path-through for indoor or underground
- Urban density increases signal multipath
- Unsecure: spoofing
- High power consumption (not well suited for the long maintenance cycle devices).

Some of these problems can be overcome by using a combination of GNSS and Radio Signal based systems, such as WiFi, Bluetooth, Bluetooth Low Energy, 2/3/4/5G cell signals, ultrawideband (UWB) signals, etc.

However, some problems (such as spoofing) remain even when combining GNSS with Radio Signal based technologies. Therefore, TensorLocation may utilize other positioning systems such as 5G based Localization systems, the NASA Agile Local Positioning System, and Low Power Wide Area Networks.

### 5G based Localization systems

The 5G wireless ecosystem will be useful for a myriad of new applications based on accurate location awareness. Such wireless ecosystems will be enabled by advanced 5G wireless technologies integrated with existing technologies for the Internet-of-Things and the global navigation satellite system.

5G is a high-frequency, low-range signal, so base stations will be clustered densely. Instead of cell towers spread widely, tiny 5G stations will blanket areas in a sort of edge-computing mesh network that distributes bandwidth and processing optimally to each user. 5G base stations can have compute data centers at their base. The distribution of that compute is going to be intelligently performed by software that allows the orchestration of where it should come from. This allows for those same stations to more accurately triangulate spatial positioning, compared with cell towers today and even GPS. GPS provides meter-level accuracy, while 5G will have sub-meter accuracy in many cases. That unlocks powerful localization capabilities useful for the Proof of Location so we can consider 5G as a useful enabler for TensorLocation.

### NASA Agile Local Positioning System

ALPS is a distributed system that consists of the set of beacons that communicate via set of links. Nodes can be placed strategically to form a distributed system within which target can navigate and perform tasks. The knowledge about network setup and physical location of nodes is not needed. ALPS relies on the fault tolerant time synchronization between nodes and this enables calculation of the relative positions of the objects. This technology can bring TensorLocation functionality, such as Proof of Location, to the places where GPS or any other technology is not available. For example, space or deep underground mines.

### Low Power Wide Area Networks

LPWAN technologies offer unique sets of features including wide-area connectivity for low power and low data rate devices, not provided by legacy wireless technologies. LPWAN networks are unique because they make different tradeoffs than the traditional technologies prevalent in IoT landscape such as short- range wireless networks. IoT and M2M devices connected by LPWA technologies can be turned on anywhere and anytime to sense and interact with their environment instantly. LPWA technologies achieve long range and low power operation at the expense of low data rate and higher latency. LPWAN have the same radio characteristics and can be used in the same way as e.g. 5G for localization purposes. However, due to very low power consumption this technology can provide TensorLocation functionality such as Proof of Location especially in IoT domain where longevity of battery is key.

### TensorLocation Crypto Coordinates

Throughout history, there have been many ways of encoding physical location into addresses, from longitude and latitude all the way to the more recent Geohash. The fact remains that most of the Earth's surface lacks addresses. According to the United Nations, 70% of the world is unaddressed, including more than half of the world's sprawling urban developments. Alternative addressing systems have attempted to increase human memorability, verifiability and machine readability. As these systems are typically either proprietary and/or lacking economic incentives, attempts to create a standard around them have been crippled. TensorLocation can provide a location standard for blockchain applications that is free, open source and interoperable so that it can securely connect offline spaces to online assets.

TensorLocation Crypto Coordinates are cryptographically encoded addresses with corresponding address located in physical space that is verifiable using smart contracts. This allows for physical locations in the environment to have linked smart contract that is accessible by distributed applications. This smart contract behaves as programmable payloads of the TensorCells and can represent any event associated with the cell. Geohash is used as a basis for this construction because of its conceptual and mathematical simplicity. Another benefit of the Geohash standard is that it is in the public domain. Geohash encodes a geographic location into a short string of letters and digits. It is a hierarchical spatial data structure which subdivides space into buckets of grid shape. Geohashes offer properties like arbitrary precision, similar prefixes for nearby positions, and the possibility of gradually removing characters from the end of the code to reduce its size (and gradually lose precision).

Other geographical indexing schemes could also be used to form Crypto Coordinates, such as the 64-bit H3 index by Uber, S2 Geometry by Google, HEXBIN, or similar. If necessary, conversions can be made using defined functions such as geoToH3 from Uber, which converts geographic coordinates (e.g. latitude and longitude) to a corresponding H3 index at a chosen resolution.

The TensorLocation Crypto Coordinates behave as an index for spatial events (or TensorCells) that works for any kind of transaction on the blockchain. Since Geohashes are intrinsically hierarchical, it also means that a transaction referencing an object, and a transaction referencing probe client located within same location, automatically have a spatial relationship. The approximate maximum resolution of the TensorLocation Crypto Coordinates may be 1cm³.

### Use cases

Building blocks can be used exclusively by a user to run its own app and maintain its own map. Additionally, an LBS provider can provide and run the MEC components to create a unified MEC-level dynamic map across participating users (e.g., car makers). A hybrid scenario can be enabled by using the DLT services to keep track of contributions to the unified map and maintain it with consensus among participants. Even though such a decentralized architecture makes sense for use cases with low latency requirements, which is a natural fit mainly for automotive, it can be adopted for IoT use cases where large volumes of data are generated and consumed in the same geographical region.

### Claim of presence

As discussed above, the issue of a "claim of presence" is a fundamental certificate to ensure a specified probe agent is in a particular position at a certain point in time.

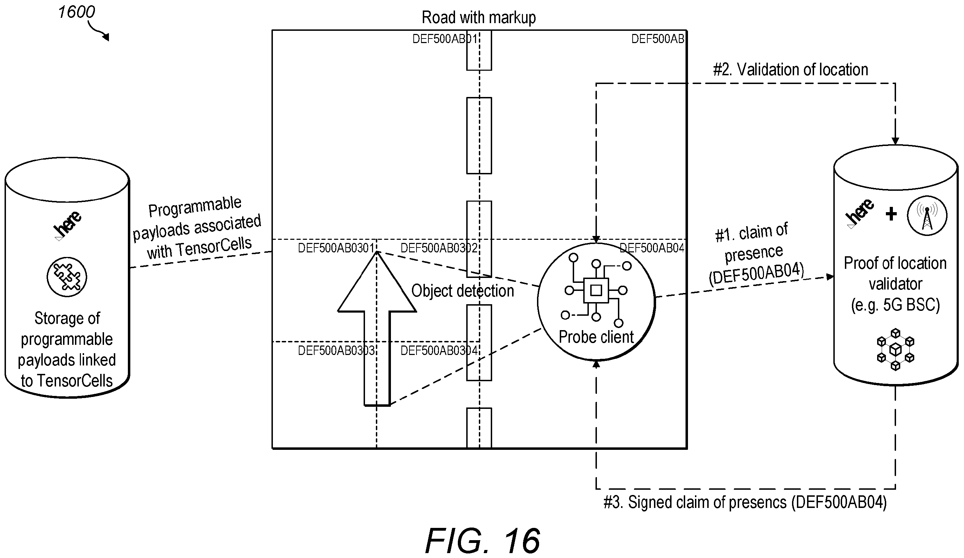

Figure 16 shows an overview of the process for accessing the MEC's services by a probe client nearby, particularly for those that require authentication and verification of location.

For example, a probe client may claim it is present at cell DEF500AB04, where the probe client e.g. can submit information about an object detection. Validation of the location is made via cell/network positioning means by e.g. a telecoms provider. With a signed claim of presence from e.g. the telecoms provider, the probe client is able to use services offered for cells related to DEF500AB04 (AB01,AB02,AB03 (and subdivisions) and AB04), where or from where the observation can have been made. The programable payload is the service that can be provided for e.g. a probe client present at the "right" cell (such as object detection ingestion).

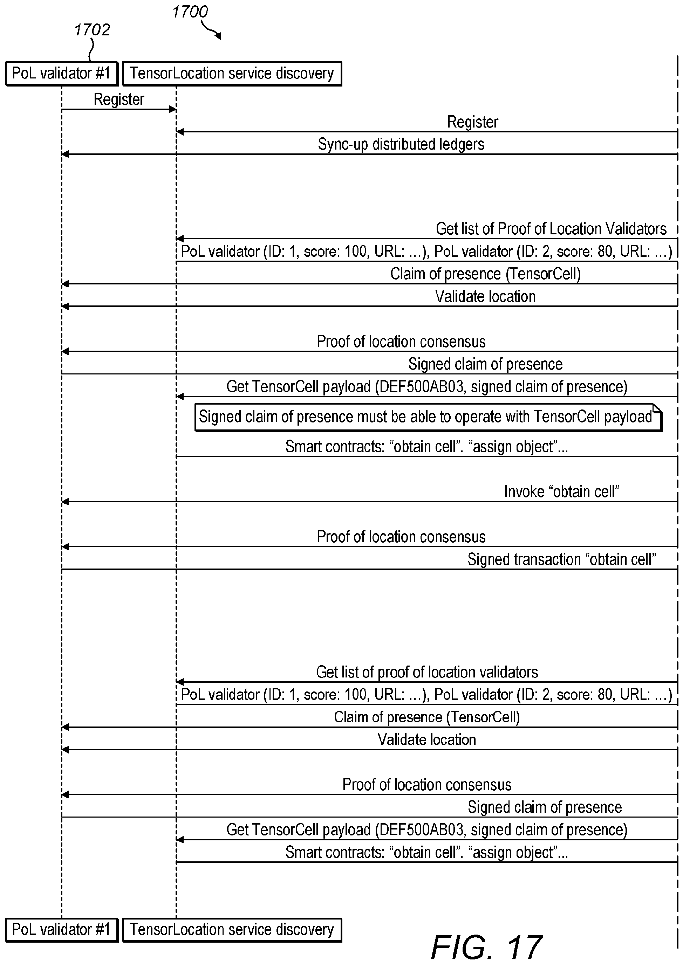

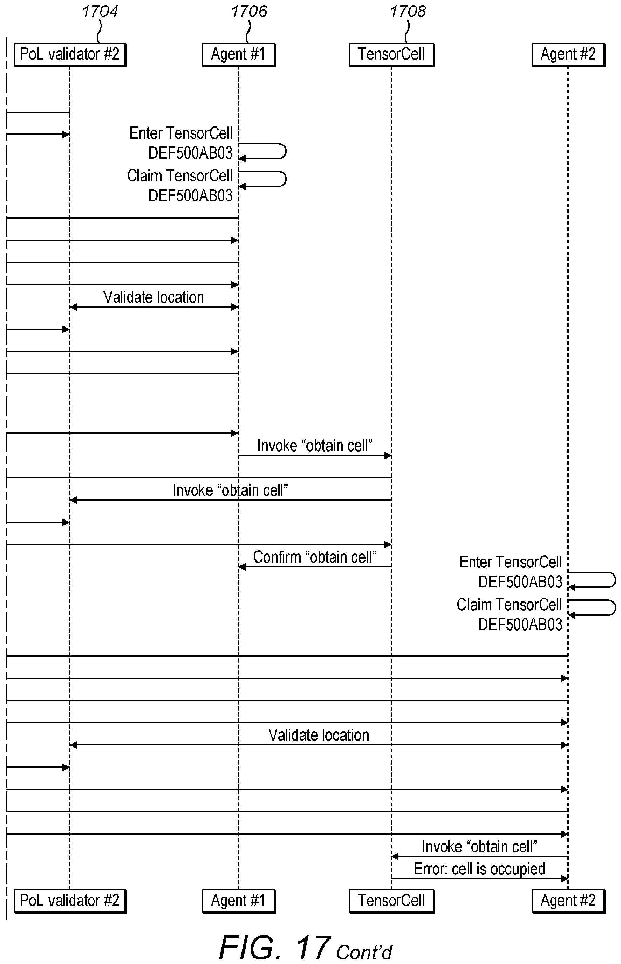

Figure 17 provides a schematic diagram of the TensorLocation claim of presence 1700 in detail.

At the beginning there is a 'registration' process where various 'validation actors' 1702, 1704 become part of the federated ledger system (blockchain based). Then a probe agent 1706 enters into a TensorCell 1708. Consensus mechanisms across the TensorLocation system are activated and a "Claim of presence" validated, signed and bullet proof transaction is written to blockchain and reference passed to the probe agent 1706. This enables and empowers the agent 1706 to run 'smart contracts' associated to the (set of nested) involved TensorCells. The probe agent 1706 is then verified and can safely execute 'smart contracts' assigned to the TensorCell(s) e.g. access and update the content of the TensorCell 1708.

### Example: object recognition

The ability to recognize objects and spatiotemporal events is an important use case for the TensorLocation system.

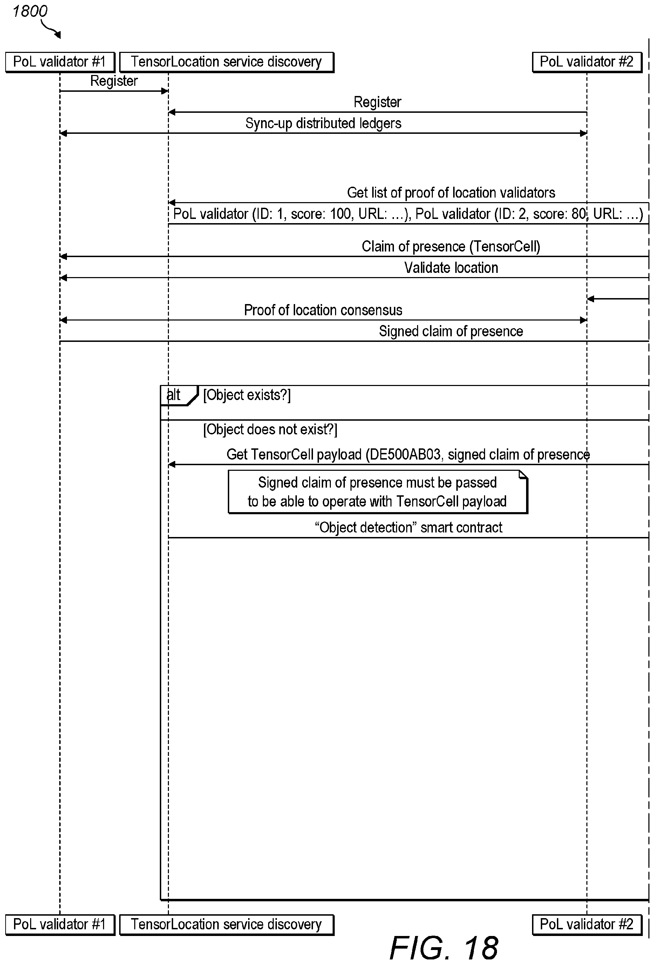

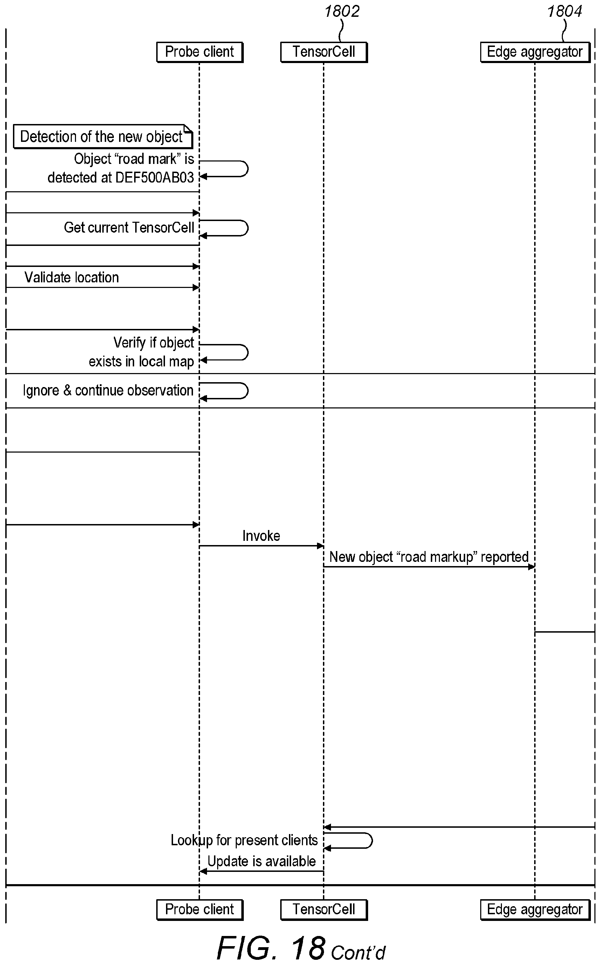

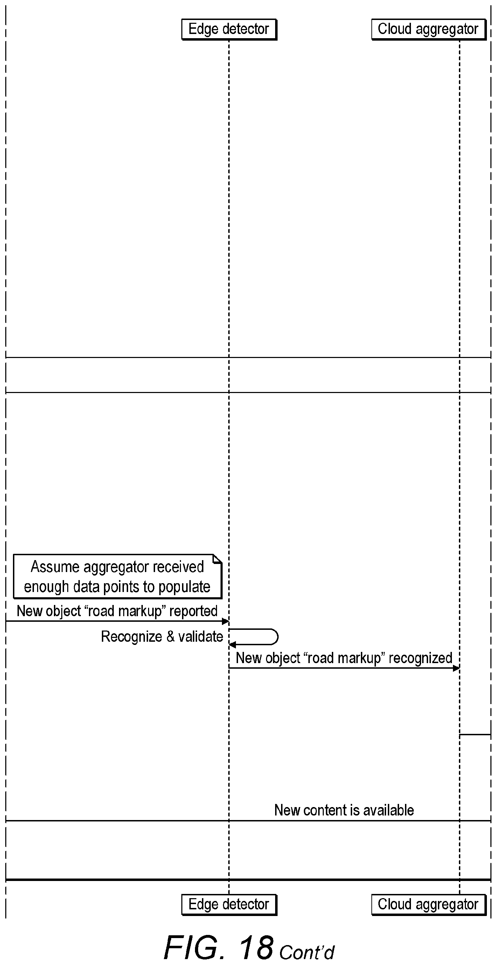

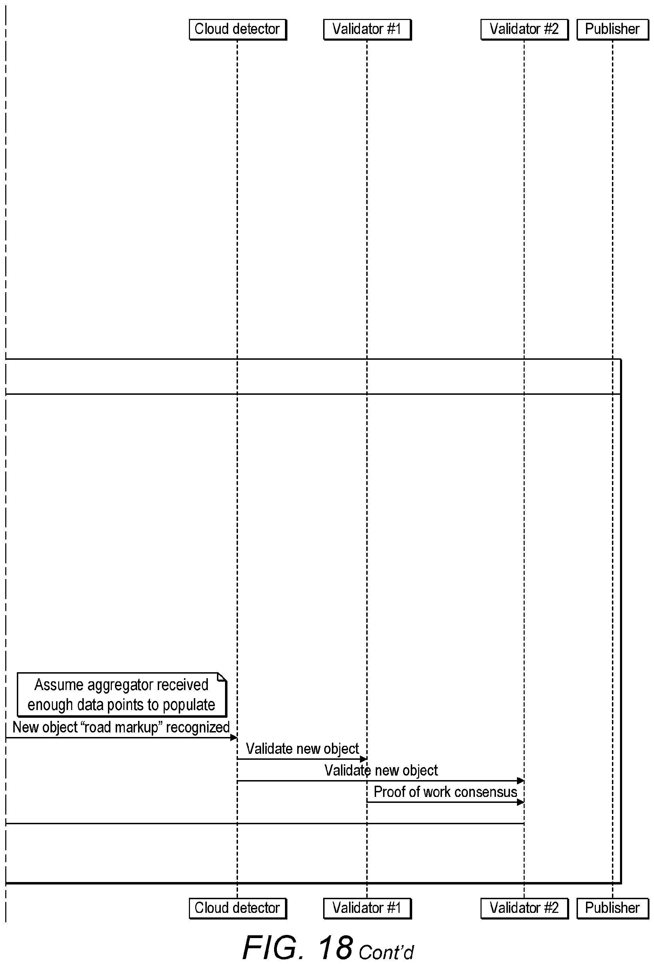

Figure 18 shows a schematic diagram of the TensorLocation object recognition process 1800 in detail. After the registration and the 'claim of presence' certificate issue described above, the probe agent 1802 is able to interact with smart contracts to identify objects and situations related to the TensorCell 1804. The set of federated p2p networks "makers" described above (e.g. detectors, aggregators, aligners and eventually publishers) is appropriately involved (leveraging the TensorLocation protocol) in order to appropriately and in 'quasi real time' include the spatiotemporal object (or situation) in the TensorLocation system. It is important to notice the highly decentralized paradigm which allows great scalability and low latencies by always fulfilling highest criteria in terms of privacy and security.

From the previous section it is already quite clear the disruptive power that TensorLocation will bring not just in the Location Industry but more in general across the entire IOT spectrum of Industries. TensorLocation will become a completely 'new game' and it will unleash lot of new possibilities and scenarios presently unforeseen.

For illustration purposes in this section some of the typical 'location use cases' are discussed with respect to key changes that TensorLocation may introduce.

### Example: dangerous Curve application (DCA)

This is a typical 'location enrichment' use case several OEMs (car manufacturers and car equipment manufacturers) are today working on. The goal is to contextually provide to drivers with warning alerts where an upcoming curve may become dangerous considering speed, and/or road conditions.

A dangerous curve detector is deployed to the in-vehicle map inference engine. The curvature from the external map may be wrong and a different curvature may be detected by the vehicle during driving. This discrepancy can be reported as an update via the MEC client. Depending on the map update rules at the MEC, the update can be recorded at the MEC-level dynamic map, which can then be propagated to other vehicles.

Details may vary depending on the implementation, but at high level the workflow a user needs to follow in order to implement this use case can be the following:
a) Select upfront the region (e.g., Germany) that the user wants to consider for DCA purposes.
b) Load centrally the map for the region and start narrowing down the areas of interest.
c) Augment and enrich the map with other data sets; in this case for example road conditions, weather, curvature radii.
d) Develop a set of AI/ML and/or algorithmic logic that may provide alerts for these situations.
e) Test the algorithm on a quite narrow set of data and ultimately produce "dangerous curve" attribute in a volatile layer that needs to be conflated with other layers.
f) Finally, since this is produced on the backend, the OEM need to ensure data is appropriately streamed into the vehicle.

Based on past experience generally the development of such an application requires about 1 year of a very experienced multidisciplinary team (10-12 people with vendor support). Conversely, with TensorLocation the approach would be dramatically different with a lot of built-in capabilities. The user (most likely the Vehicle Manufacturer / OEM in this case) already has a private and personalized TensorLocation system fully p2p and distributed where not only curves are already a recognized class of features linked into TensorCell but also the running cars of its fleet are a set of authorized 'probe actors' and TensorLocation agents.

Therefore, with TensorLocation, a use case such as a Dangerous Curve application will result into a simple set of configuration / declarative commands through TensorLocation operators. This use case provides a good example of where a possible cascade of functionalities may be provided as a vehicle moves through a series of TensorCells getting progressively closer to the hazardous TensorCell, which in this case contains the dangerous curve. A first functionality could be to provide a warning that the driver should take over control of the vehicle's autonomous system. If the driver does not do so then a second functionality could be to instruct the autonomous vehicle to slow down to a safe speed.

At a high level the 'pseudo-commands' the OEM should enter from its TensorLocation console may be as follows.
1) When TensorLocation Agent of Type (OEMCarType X) are close to TensorCell with feature of Type Curve (located in Germany), activate executable Neural Model zz1
2) Enable feedback loop: yes

It is easy to recognize how the 'keywords' underlined above directly match the TensorCell structure and operators described above.

Essentially, the tensor algebra enabled by TensorLocation will take care of the appropriate transformation to realize the use cases. Moreover since the system is highly distributed and federated it is quite simple to activate the feedback loop so, in this case, all the OEM fleet cars which are enjoying the dangerous curve alert can also learn about the real situation, they can communicate back the learning (as probe actors), and based on TensorLocation distributed 'audit proof' built in consensus, the neural model for all the rest of the car fleet could constantly improve.

### High Autonomous Driving use cases

A 'holy grail' exists around HAD and its profound implications in the Automotive and more in general across the entire Mobility Industry. However, as of today, some key fundamental limitations are still common across the board:
- The approach is very server centric and does not involve Edge Computing at all.
- The combination of HAD content with the AV perception stack is still very 'ad hoc', not standardized and suffers of several limitations.
- While existing approach may be acceptable for an initial set of precursory implementations (on high class type of cars and mostly for marketing purposes) there is no real line of sight yet if this may scale to truly become an industrial possibility; lack of real time, lack of a continuous feedback loop, lack of an efficient set of monitoring tools are all serious concerns.
- Finally, even if most modern approaches include multisource (e.g., satellite, sensor, imagery, etc.), so far the 'central HAD engine' needed to deal with huge amount of raw sensor data may cause serious concerns in terms of computing power and ultimately computation costs.

The leverage of TensorLocation in the HAD set of use cases will profoundly change the way HAD is conceived today and it will allow a solid industrialization for autonomous driving '
- Every OEM, through TensorLocation, may have its own HAD system flavor so they can focus their efforts and IP on truly differentiating aspects (e.g., user experience augmentation, new busines models, etc.) rather than spending large amounts of time in the manipulation of HAD attributes.
- Today HAD implementation has two very distinct phases: 1) coverage where an initial set of HAD maps is computed for the regions under scope; and 2) maintenance where the map is kept updated under some pre-defined level of freshness. With TensorLocation the entire set up is now far more straightforward: the OEM will have a set of TensorCells, each TensorCell will have its attribute and semantic relationships to make easier the naming and identification of related features (e.g. 'the lane on A81') and each TensorCell will be accessed through space and time coordinates (e.g., 'give me the state of this lane now' or, 'I want to see changes of this lane over past 3 months'.)
- TensorLocation will leverage input coming (as neural model's quanta) from a variety of endpoints (TensorCell) and already pre-processed at the endpoint. In other words, collected data will be processed (e.g. for ML-model training locally on device), and derived information will be used as input when cells exchange between each other or TensorLocation services e.g. commit of the local ML-model into the global model. This produces several advantages:
   ∘ the amount of data to be transmitted is significantly reduced (10 times factor estimate) with dramatic benefits in terms of latency reduction.
   ∘ since the data will be already processed at the endpoint (through a neural network, for example), it becomes easier to further encrypt that and really ensure a 'privacy by design' implementation.
   ∘ a built-in robust consensus mechanism across participants guaranteeing an increased level of fidelity concerning ground truth (e.g., 'if I have a dozen 'probe actors' who are alerting about a change in the unit of time, there is high probability the change is real')
- TensorLocation will also naturally open new business models in the HAD space; for example an OEM may decide to partner with a parking operator or an EV charging provider and just through a declarative command, establish a set of 'micro rewarding' (sort of virtual coupons or coins) for a group of actors (e.g., car drivers in this case) who may decide to use those parking and/or EV service facilities.

### Example: a new shopping experience

A few retailers are currently working on how to dramatically innovate around the entire shopping experience at the stores with the goal to eliminate cashiers, lines, and waiting times etc.

TensorLocation can enable a cashier-less automated secure shopping experience, where a smart store tracks in real-time the status of its shelves using TensorLocation. When there is a status update on the blockchain for a shelf in the store, the closest customer's cart is updated. When the customer leaves the store, their TensorLocation wallet is charged.

TensorLocation may become a great enabler for this type of use cases and it can 'democratize' these use cases without requiring a large amount of specialized infrastructure and dedicated AI/ML machinery that only a giant enterprise can afford.

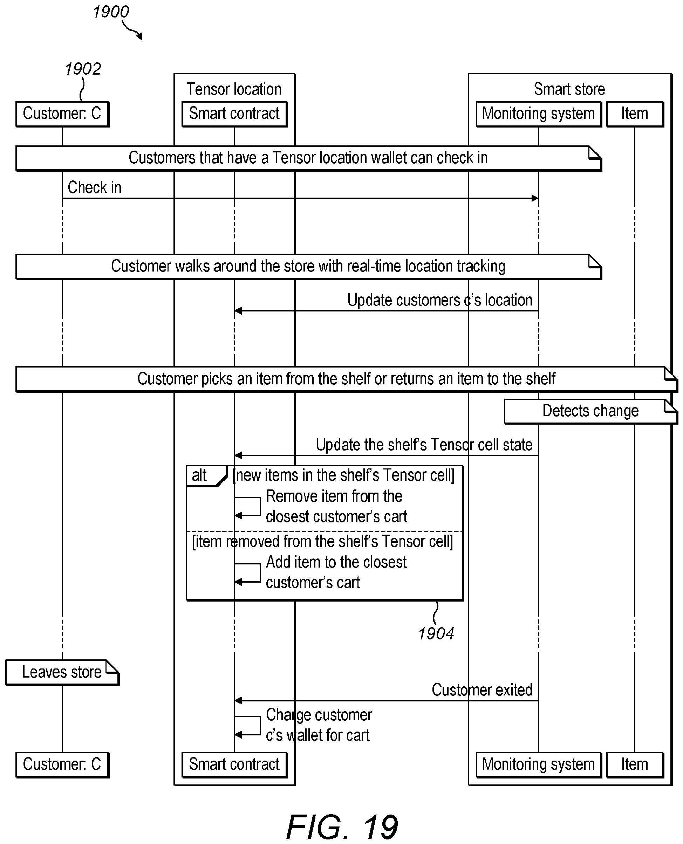

Figure 19 shows exemplary steps of a smart store process using TensorLocation:
1) Enable (for example, through the use of a smartphone app) TensorLocation for customer C entering in the store. At this point customer C will be a TensorLocation agent 1902.
2) Identify (through pressure sensors, RFID, NFC, computer vision techniques or the like) the link between the merchandise on the shelves and the related TensorCells
3) For the TensorCells that are related to the goods on the shelf add a declaration that says:
   a. "when TensorCell for good X is changing, and, TensorCell for good X is close to customer C, then charge customer C and activate a transaction from their wallet" concerning the good which has been removed.

In this case, the cells (i.e. TensorCells) may be associated with different shelves of the store. The validity-time-interval for each TensorCell may correspond to a time interval for which the item will be on the shelf. The semantic-location-data may represent a product code, name and/or type. The executable code instructions may be those of the smart contract (such as marking an item as removed from the shelf and added to the customer's basket and ultimately charging the customer), and the instructions may be executed by one or more edge nodes in the shop.

### Example: next generation Data Marketplace

App owners can interact with other apps at the same MEC-level by subscribing to data streams (sensors, neural models, etc.) available in the region allowing more sources or better models to be used for a more accurate and enriched map. DLT services enable the high transaction rate among apps (customers) on the same MEC, vehicles or IoT devices.

### Example: IoT Sensor Data Marketplace

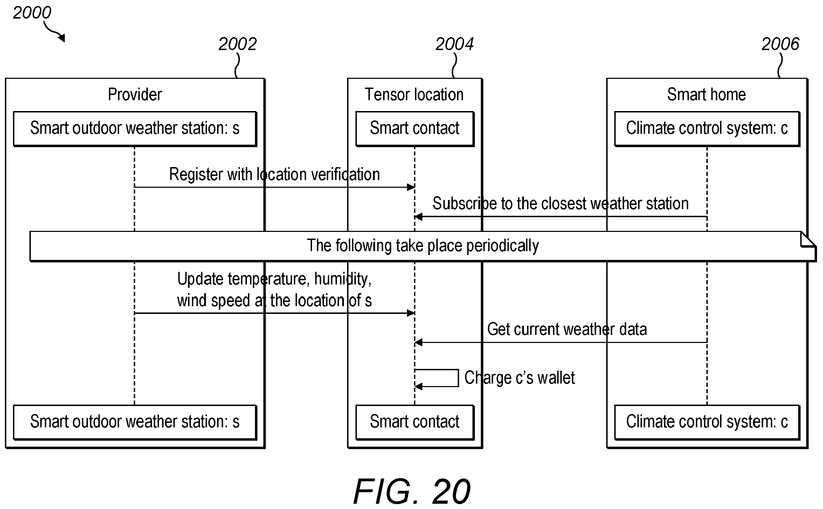

Figure 20 shows an example of IoT sensor data transactions 2000 on TensorLocation. TensorCells store weather data, which can be consumed by smart home systems. A smart contract of the TensorLocation system also handles the accounting of transactions.

In the illustrated example, a weather station 2002 of a weather provider registers with the smart contract 2004, and a climate control system 2006 of a smart home subscribes to the closest weather station (in this case the weather station 2002). The weather station 2002 then periodically updates weather values at the smart contract such as temperature, humidity, wind speed etc. based on sensor data, and the climate control system periodically requests current weather data from the smart contract. The smart contract then issues a charge to the owner of the climate control system 2006, e.g. as a regular subscription or for each weather request.

In this example, the cell (i.e. TensorCell) of the smart contract is associated with geographical area containing the weather station 2002 and/or the climate control system 2006. The validity-time-interval may be the duration for which the weather values are deemed to be valid (e.g. one hour from the most recent update). The semantic-location-data may be one or more of sensor type (e.g., temperature, wind, humidity), sensor unit (e.g., Celsius, Fahrenheit), sensor device information or similar. The executable code instructions may be those of the smart contract, and the instructions may be executed by an edge node in the same geographical area as the weather station 2002 and the climate control system 2006.

### Example: cooperative mapping and mobility

A digital map usually contains a variety of features/objects that range from permanent/static to ephemeral/dynamic. Among the most dynamic features/objects of the map are locations and velocities of road users such as vehicles, pedestrians, bikes as well as dynamic elements such as traffic lights, level crossing barriers etc.

No single vehicle maker can capture such the state of the world by its own fleet. In order to realize use cases based on this dynamic state such as flow management at intersections or ensuring safety of vulnerable road users, observations from as many vehicles must be shared and fused at the MEC-level, instead of a siloed approach, as e.g. a vehicle maker's fleet would do. The efficiency (saved time and fuel) and safety (saved lives and injuries) gained by such high coordination can be used to compensate road users according to their contributions, which can be tracked by DLT.

In addition to this read-only view of the world, TensorCells can be used for finer grained control by negotiating the exclusive use of a TensorCell (in space and time) via DLT and consensus services to implement safer actions such as overtaking, road crossing, coordination at intersections and traffic signals etc.

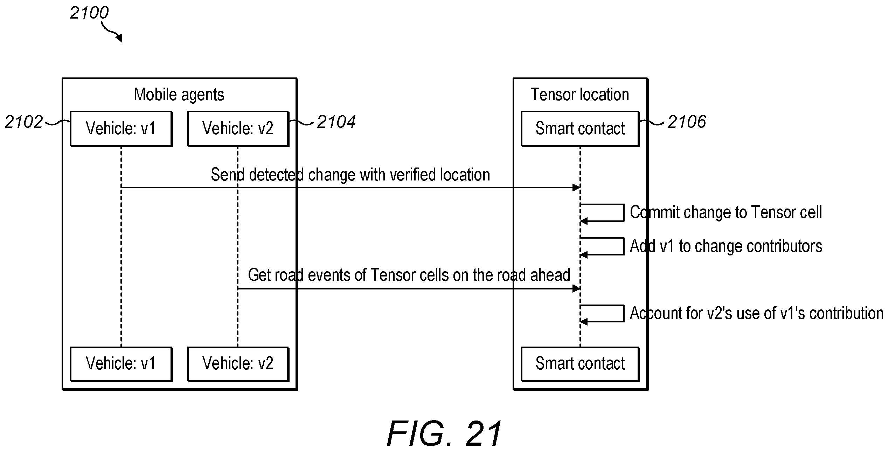

Figure 21 shows an example of cooperative mapping 2100. Mobile agents cooperate on TensorLocation to maintain the dynamic state (e.g., hazards, temporary changes) of the road network map. The mobile agents may also update changes to the road network map by exchanging/contributing other sensor information pertaining to static road features and/or roadside objects. Detection of permanent changes (e.g., new road, new lane, changed traffic sign) or transient changes (e.g., accident, road work, lane closure) in the road network can be done by in-vehicle change detectors and sent to the MEC-level. Depending on the map update rules at the MEC, the update can be recorded at the MEC-level dynamic map, which then gets propagated to other vehicles.

A first vehicle 2102 may send a detected change to the smart contract 2106 (preferably having verified its location, i.e. that it is in the location covered by the TensorCell associated with the change). Upon receiving the detected change, the smart contract 2106 executes code to commit the change to the TensorCell. A second vehicle 2104 may then request details of road events on TensorCells ahead and may be provided with information including the change detected by the first vehicle 2102.

In this case, the cell (i.e. TensorCell) of the smart contract is associated with the geographical area containing the first vehicle 2102 and the section of road for which there has been a change. The validity-time-interval may be an expected duration of the change detected by the first vehicle 2102 (e.g. for a traffic collision, a default value such as one hour may be chosen). The semantic-location-data may be a change detection message, which can optionally conform to the SENSORIS sensor interface specification standard. The executable code instructions may be those of the smart contract, and the instructions may be executed by an edge node in the same geographical area as the first vehicle 2102.

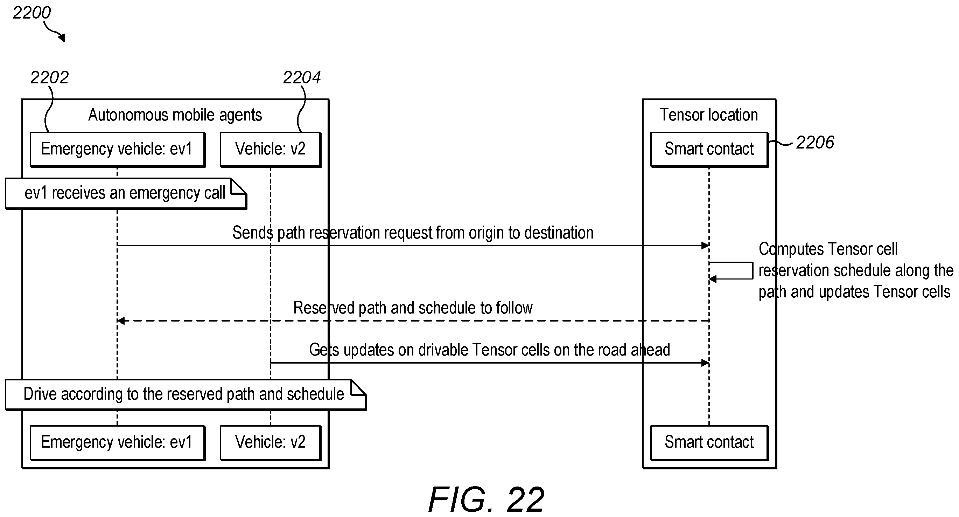

Figure 22 shows an example of cooperative mobility 2200 in which vehicles can reserve a certain section of a road for e.g. planner maneuvers such as overtaking, lane changes, turns at intersections etc. Autonomous vehicles cooperate on TensorLocation to reserve drivable TensorCells at certain time intervals. This is enabled by the time range of validity attribute of TensorCell.

In the illustrated example, an emergency vehicle 2202 may receive an emergency call and send a path reservation request to a smart contract 2206 of a TensorCell. The smart contract 2206 then computes a TensorCell reservation schedule along the path and updates TensorCells and replies to the emergency vehicle 2202 with details of the reserved path and the schedule to follow. A second vehicle 2204 may request updates on drivable TensorCells on the road ahead and determine that some of the cells are reserved by the emergency vehicle 2202. The vehicles can then both drive according to the reserved path and schedule.

In this case, the cells (i.e. TensorCells) may be those corresponding to the geographical area containing the emergency vehicle 2202 and the reserved path. The validity-time-interval for each TensorCell corresponds to the time for which the TensorCell has been reserved for the emergency vehicle 2202. The semantic-location-data may be a special cell reservation tag that should be respected by road users. The executable code instructions may be those of the smart contract (such as computing and reserving the path), and the instructions may be executed by one or more edge nodes in the same geographical area as the TensorCells along the path.

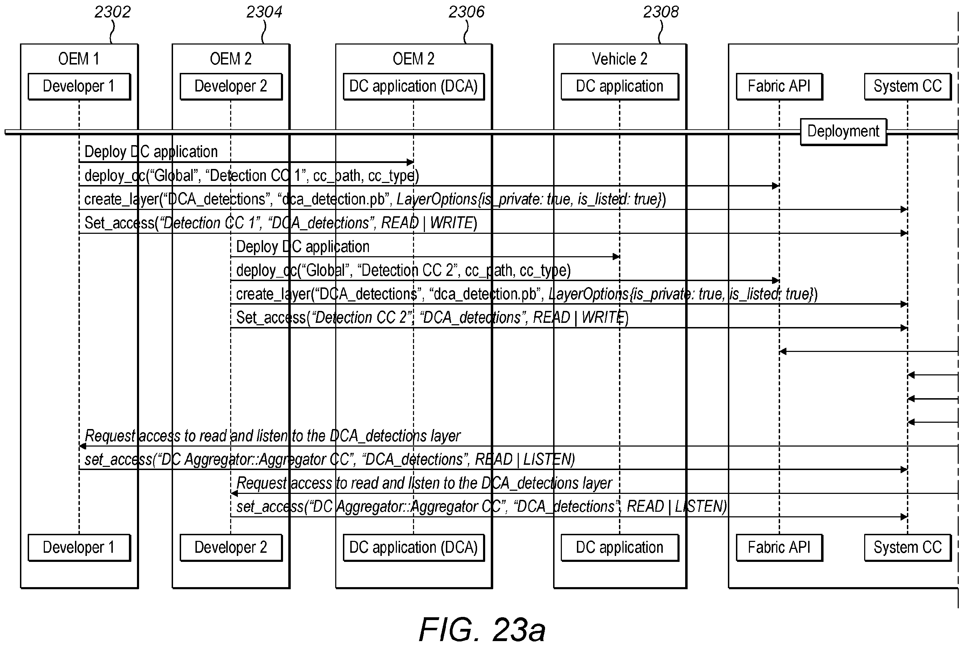

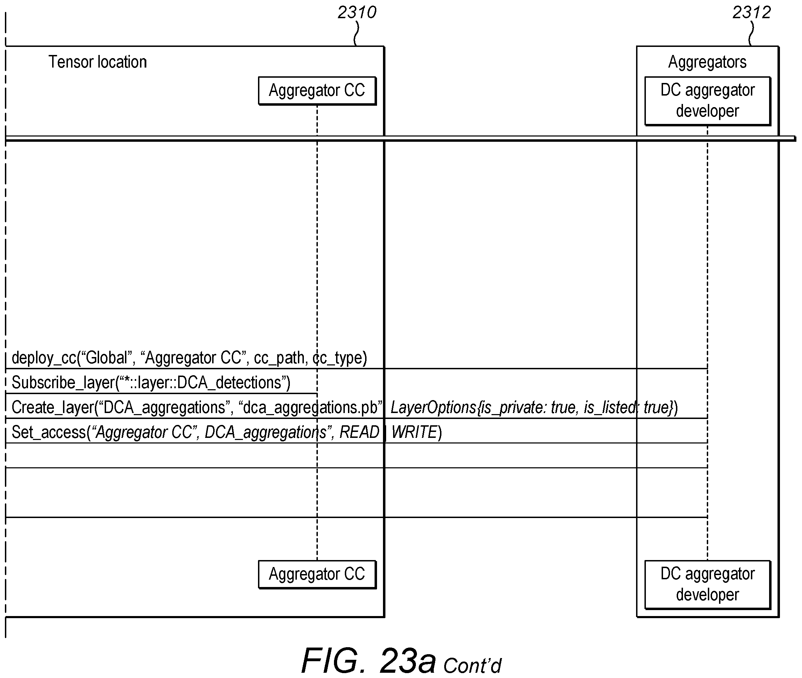

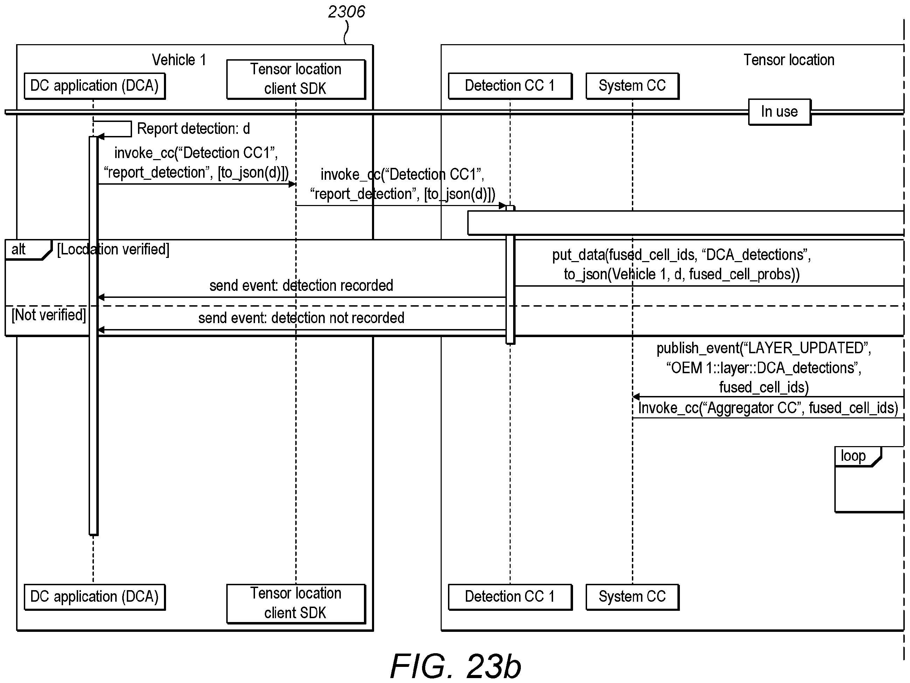

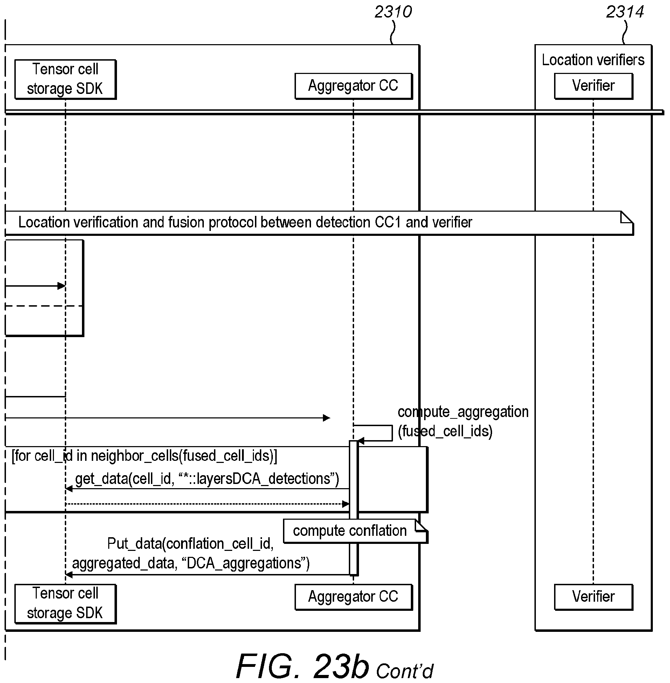

Figures 23a and 23b show an example of cooperative mapping of dangerous curves involving a first OEM 2302 associated with a first vehicle 2306 and a second OEM 2304 associated with a second vehicle 2308.

Vehicles are increasingly equipped with on-board capabilities to detect their surroundings such as road signs, vehicles, pedestrians and so on. One of the challenges that is faced by OEMs is to aggregate the in-vehicle observations among the whole fleet and derive a real-time and always up-to-date map.

The cooperation can be within the fleet of a single OEM or among the fleets of multiple OEMs. The Tensor Location System lays the groundwork upon which OEMs can deploy and operate their cooperative mapping applications.

One such application is the dangerous curve application (DCA) mentioned earlier, in which the curvature of a section of the road is computed by the vehicle and marked as a dangerous curve when it is above some threshold.

Figure 23a shows the deployment phase of DCA involving the first OEM 2302 and the second OEM 2304 and an aggregator actor 2312 in communication with a TensorLocation system 2310. The OEMs 2302 and 2304 are responsible for developing in-vehicle applications that detect dangerous curves and interact with TensorLocation using a client SDK. The OEMs also develop and deploy the detection chain code running in TensorLocation. Such third party chain code can utilize an API exposed by System Chain Code (System CC).

Each OEM creates a private layer for storing the detections by its fleet. A cooperating aggregator can be given access to read these detection layers of various OEMs. The aggregator deploys the aggregation algorithm as a chain code that subscribes to write events in the detection layers and writes results into a dangerous curve aggregations layer. This layer can be made available to OEMs.

Figure 23b shows the use phase of DCA. Upon detection of a dangerous curve by the first vehicle 2306, the first vehicle 2306 reports the dangerous curve to the TensorLocation system 2310 by invoking an endpoint on the detection chain code, which in turn registers it in the Tensor Cell Storage. Depending on availability, the location of the first vehicle 2306 can be verified by a location verifier 2314. A write on a detection layer, which has been subscribed to by an aggregator, triggers the corresponding chain code that computes a conflated location for the dangerous curve and writes it to storage.

In this example, the TensorCell is the cell corresponding to the geographical area containing the dangerous curve. Because road topology is a relatively static feature, the validity-time-interval for each TensorCell may be a semi-open time interval starting from the time of first confirmed observation. The semantic-location-data may be a map attribute that marks the cell as a dangerous curve. The executable code instructions may be those of the smart contract (i.e. the code invoked when a vehicle reports the dangerous curve), and the instructions may be executed by one or more edge nodes in the same geographical area as the TensorCell associated with the dangerous curve (i.e. in the vicinity of the detected dangerous curve).

### Example: private mapping

A user can create a private, virtual 3D representation of their facilities (e.g., a mine, agriculture fields/gardens, plants, factories, etc.), and configure cells to behave differently depending on their payload.

A user may be a big parcel delivery service that leverages robots to store and dispatch parcels automatically. These robots must navigate through storage facilities/units efficiently. Every parcel has assigned unique id. When parcels are loaded/offloaded, it is unregistered/registered into the cell where it is stored.

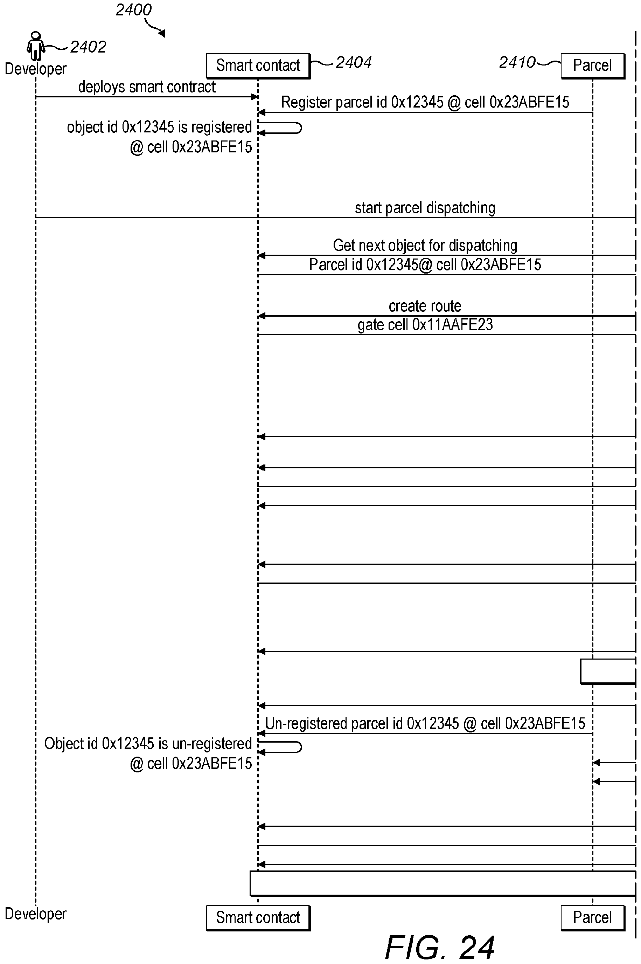

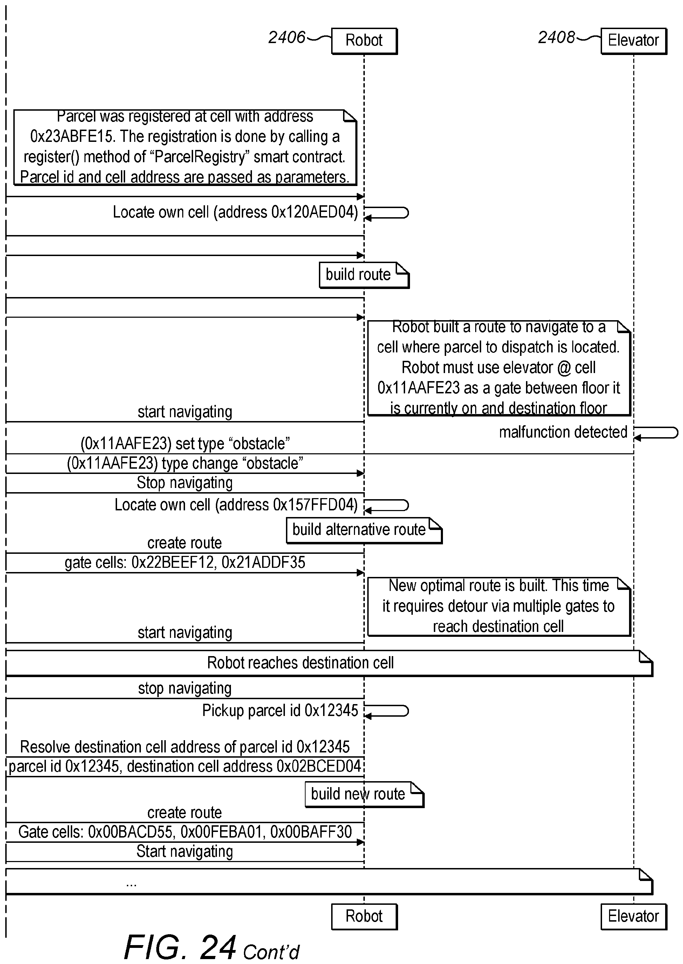

Figure 24 shows an example of private mapping 2400 for a parcel dispatch warehouse.

A developer 2402 working for the user develops smart contracts 2404 using TensorLocation SDK for the solution to operate robots 2406 on storage facilities. This smart contract provides the following methods:
1. set and get cell type,
2. register / un-register object with given id within the cell,
3. get next object for dispatching to pop the parcel out of the queue,
4. create route to build the route from origin to destination by going through all the gates avoiding obstacles,
5. start/stop navigating to report to TensorLocation that a robot is going through the created route. This method schedules the cells where robot must pass so other robots will not interfere. In case type of the cell in the route changes, corresponding robot is notified and needed action is taken.

The Developer then deploys this smart contract into the MEC into the corresponding TensorLocation channel.

By default, TensorCells provide the ability to get cell addresses (geolocation index), set time validity for how long the configured payload of the cell is valid.

For their purpose, the developer defines three types of the cells: empty, obstacle, gate. By leveraging the capabilities of TensorCells to assign cell type, the developer assigns a corresponding type to the cells to create a virtual 3D representation of the facilities to enable robots to navigate automatically within the facilities. Walls and storage shelves are marked as obstacles. Doors between storage rooms or elevators 2408 between floors are marked as gates. Cells covering areas free of obstacles are left empty. Gate cells connect free areas and help robots in navigating. Such configuration allows robots to build routes. For example, to get from a storage room on 1st floor to the room on the 3rd floor, a robot must pass all the gate cells between original and destination cells avoiding obstacles (cells with corresponding type). All the objects within the facilities can communicate with cells to help robots to achieve their goal to dispatch all the parcels 2410 in the most optimal way.

In this case, the cells (i.e. TensorCells) may correspond to the different regions of the storage facility (e.g. rooms, obstacles such as walls, and 'gates' such as doors and elevators). The validity-time-interval for the TensorCells denotes the interval that an object occupies the cell. The semantic-location-data may be the type of the object that occupies the space (e.g. wall, door, shelf, parcel etc.). The executable code instructions may be those of the smart contract (such as registering parcels, creating routes etc), and the instructions may be executed by one or more edge nodes within the facility (e.g. an edge node in each room or part of a room).

### Computer program product

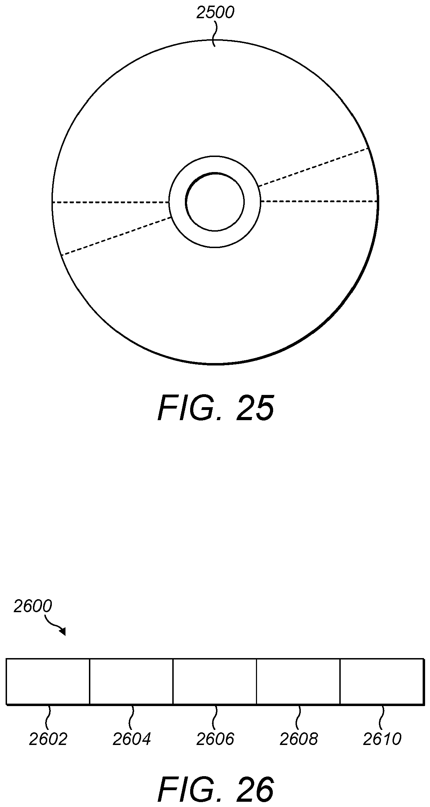

Figure 25 shows an example computer program product 2500 (equivalently, a computer readable memory medium) that contains instructions that, when executed, cause a system (or apparatus) as described in relation to figure 7, to at least perform the steps of any of the methods described herein.

### Data structure

Figure 26 shows a data structure 2600 for providing time-valid location-based information for an environment defined by a plurality of cells, each cell comprising a respective location with a range based on a geographical extent of the respective cell within the environment. The data structure 2600 comprises data defining a series of blocks of information. A first block 2602 is representative of a header. A second block 2604 is representative of a respective predetermined validity-time-interval. A third block 2606 is representative of a respective semantic-location-data relevant to the respective location. A fourth block 2608 is representative of respective executable code instructions configured to operate on the respective semantic-location-data to enable determination of respective time-valid location-based information upon execution of the respective code instructions by a first edge computing apparatus proximal to the respective location. A fifth block 2610 is representative of a footer. The respective time-valid location-based information is valid within the respective predetermined validity-time-interval. The data structure may also define a blockchain operative on an edge computing network comprising the first edge computing apparatus and/or a smart contract for one of the cells comprising the respective executable code instructions for the cell.

It will be appreciated that the second block 2604, the third block 2606, and the fourth block 2608 may be positioned in any order with respect to one another. It will be further appreciated that additional blocks of data may also be added to the data structure 2600 without compromising its essential functionality. Further, the data structure 2600 may conform to any standard data protocols.

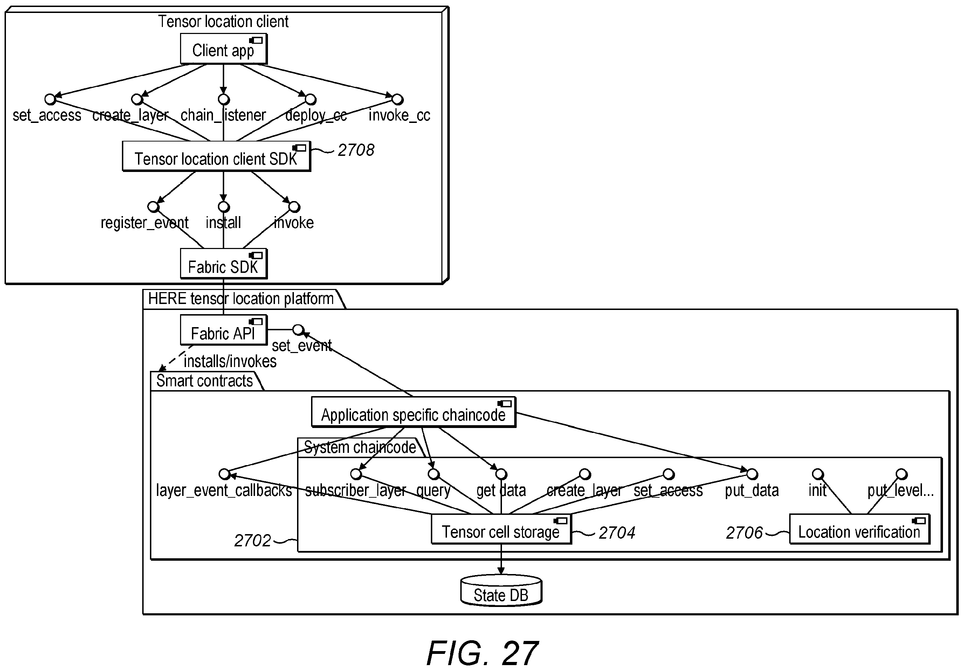

The main components of the TensorLocation system are shown in Figure 27. At its core, TensorLocation provides some platform services implemented as System Chain Code 2702 (i.e. code residing on the blockchain/distributed ledger). These services are the Tensor Cell Storage 2704 and Location Verification 2706 (and Consent Management).

Tensor Cell Storage 2704 supports storage related functions. TensorCell data can be grouped in layers. Layers have access control rights. TensorCell data can be queried. Other chain code can subscribe to layer updates. Tensor Cell Storage 2704 may provide the following functions:
- create_layer - create new layer of data in the system. Layer is chain code scoped [only specific chain code has access to specific layer], if no chain code name provided it's scoped to system chain code [a global chain code which can be accesses by all system users]. Layers can represent specific data structures in e.g. protobuf format, for such case protobuf schema must be submitted when creating layer.
- delete_layer - deletes layer
- put_data - saves data into the specified layer and related to the current cell
- get_data - retrieves some data from layer
- delete_data - deletes data record from layer
- list_layers - returns list of layers this cell associated with
- query - returns data based on query.

Location Verification 2706 provides endpoints for both location consumers and location verifiers to carry out the Location Verification Protocol. (Consent Management provides endpoints to end users to manage consent for the use of their private data and consent for location verification.)

The Tensor Location Client SDK 2708 is a library that provides functions to utilize Tensor Location Platform services at the client side.

The Tensor Location Client SDK may provide a TensorClient class with the following functionality:
- get_tensor_cell - get an instance of TensorCell class by the cell id.
- create_layer - create new layer of data in the system. Layer is chain code scoped [only specific chain code has access to specific layer], if no chain code name provided it's scoped to system chain code [a global chain code which can be accesses by all system users]. Layers can represent specific data structure in e.g. protobuf format, for such case protobuf schema must be submitted when creating layer.
- delete_layer - deletes layer
- deploy_cc - deploys new chain code. Chain code is associated with some cells, those cells can be specified by providing cell ids or query that will return some cell ids.
- invoke_cc - invokes chain code and provides set of cells this chain code will affect by specifying cells ids or query
- listen_to_event - sets handler for some specific event that will be fired by some chain code

The Tensor Location Client SDK may also provide a TensorCell class with the following functionality:
- ID - tensor cell id [geohash but data lives in data] in the format of geohash that contains coordinates and level
- put_data - saves data into the specified layer and related to the current cell
- get_data - retrieves some data from layer
- delete_data - deletes data record from layer
- invoke_cc - invokes chain code on the current cell
- add_cc - adds current cells id to the list of associated cells of chain code
- list_layers - returns list of layers this cell associated with
- query - returns some data based on query.

A Tensor Location application can comprise a client application and application-specific chain code. The client application uses Tensor Location SDK and interacts with the application-specific chain code and System Chain Code.

In the above disclosure, the terms probe actor, probe agent and probe client may be used interchangeably to refer to a device such as a user device or user equipment. The user device may be a device such as a smartphone, tablet computer, laptop computer, desktop computer etc., or it may be e.g. specialized vehicle mapping equipment or navigational systems. Probe data may be collected by the user device/probe actor and provided to a remote entity.

More specifically, probe data (e.g., collected by a mobile device) may be representative of the location of the probe actor (or a vehicle associated with the probe actor) at a respective point in time and may be collected while a vehicle is traveling along a route. The probe data may include, without limitation, location data, (e.g. a latitudinal, longitudinal position, and/or height, GPS coordinates, proximity readings associated with a radio frequency identification (RFID) tag, or the like), rate of travel, (e.g. speed), direction of travel, (e.g. heading, cardinal direction, or the like), device identifier, (e.g. vehicle identifier, user identifier, or the like), a time stamp associated with the data collection, or the like.

The probe actor may also collect data relating to environmental features around the probe device by including sensor mechanisms configured to capture the probe actor's environment, i.e. objects and features perceivable at the probe actor's location. These sensor mechanisms may include radar, infrared, ultrasonic, and vision-oriented sensors such as image sensors and light distancing and ranging (LiDAR) sensors.

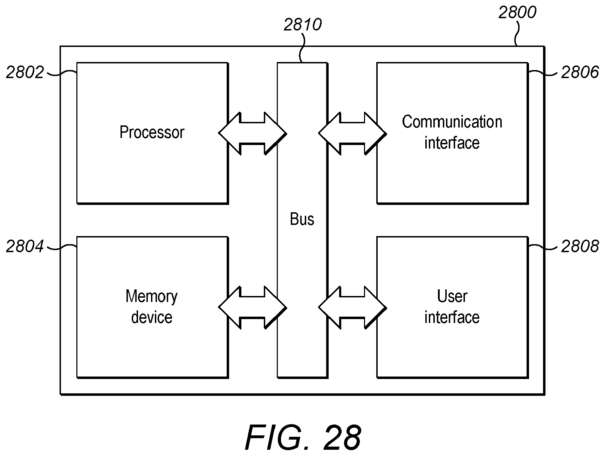

An example embodiment of a TensorLocation system and/or MEC device may be embodied in an apparatus 2800 such as that shown in Figure 28. The apparatus 2800 may include or otherwise be in communication with a processor 2802, a memory device 2804, a communication interface 2806, and a user interface 2808. In some embodiments, the processor 2802 (and/or co-processors or any other processing circuitry assisting or otherwise associated with the processor 2802) may be in communication with the memory device 2804 via a bus 2810 for passing information among components of the apparatus 2800. The memory device 2804 may be non-transitory and may include, for example, one or more volatile and/or non-volatile memories. In other words, for example, the memory device 2804 may be an electronic storage device (for example, a computer readable storage medium) comprising gates configured to store data (for example, bits) that may be retrievable by a machine (for example, a computing device like the processor 2802). The memory device 2804 may be configured to store information, data, content, applications, instructions, or the like, for enabling the apparatus 2800 to carry out various functions in accordance with an example embodiment of the present invention. For example, the memory device 2804 could be configured to buffer input data for processing by the processor 2802. Additionally or alternatively, the memory device 2804 could be configured to store instructions for execution by the processor 2802. The communication interface 2806 may provide location estimates for wirelessly connected clients, e.g. network-based positioning techniques.

The processor 2802 may be embodied in a number of different ways. For example, the processor 2802 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 2802 may include one or more processing cores configured to perform independently. A multi-core processor may enable multiprocessing within a single physical package. Additionally or alternatively, the processor 2802 may include one or more processors configured in tandem via the bus 2810 to enable independent execution of instructions, pipelining and/or multithreading.

In an example embodiment, the processor 2802 may be configured to execute instructions stored in the memory device 2804 or otherwise accessible to the processor 2802. Alternatively or additionally, the processor 2802 may be configured to execute hard coded functionality. As such, whether configured by hardware or software methods, or by a combination thereof, the processor 2802 may represent an entity (for example, physically embodied in circuitry) capable of performing operations according to an embodiment of the present invention while configured accordingly. Thus, for example, when the processor 2802 is embodied as an ASIC, FPGA or the like, the processor 2802 may be specifically configured hardware for conducting the operations described herein. Alternatively, as another example, when the processor 2802 is embodied as an executor of software instructions, the instructions may specifically configure the processor 2802 to perform the algorithms and/or operations described herein when the instructions are executed. However, in some cases, the processor 2802 may be a processor specific device (for example, a mobile terminal or a fixed computing device) configured to employ an embodiment of the present invention by further configuration of the processor 2802 by instructions for performing the algorithms and/or operations described herein. The processor 2802 may include, among other things, a clock, an arithmetic logic unit (ALU) and logic gates configured to support operation of the processor.

The apparatus 2800 of an example embodiment may also include a communication interface 2806 that may be any means such as a device or circuitry embodied in either hardware or a combination of hardware and software that is configured to receive and/or transmit data to/from a communications device 2806 in communication with the apparatus 2800, such as to facilitate communications with one or more user equipment or the like. In this regard, the communication interface 2806 may include, for example, an antenna (or multiple antennae) and supporting hardware and/or software for enabling communications with a wireless communication network. Additionally or alternatively, the communication interface 2806 may include the circuitry for interacting with the antenna(s) to cause transmission of signals via the antenna(s) or to handle receipt of signals received via the antenna(s). In some environments, the communication interface 2806 may alternatively or also support wired communication. As such, for example, the communication interface 2806 may include a communication modem and/or other hardware and/or software for supporting communication via cable, digital subscriber line (DSL), universal serial bus (USB) or other mechanisms.

The apparatus 2800 may also include a user interface 2808 that may in turn be in communication with the processor 2802 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processor 2802 may comprise user interface circuitry configured to control at least some functions of one or more user interface elements such as a display and, in some embodiments, a plurality of speakers, a ringer, one or more microphones and/or the like. The processor 2802 and/or user interface circuitry comprising the processor may be configured to control one or more functions of one or more user interface elements through computer program instructions (for example, software and/or firmware) stored on a memory accessible to the processor (for example, memory device, and/or the like).

The user device/probe actor of some embodiments may be integrated with or otherwise on-board a vehicle whereby the apparatus may be equipped with or in communication with (e.g., via a communications interface) one or more sensors, such as a Global Navigation Satellite System (GNSS) sensor (e.g., GPS, Galileo, GLONASS, etc.), accelerometer, image sensor, inertial measurement unit (IMU), gyroscope, magnetic field sensor, etc. Any of the sensors may be used to sense information regarding the location, movement, positioning, or orientation of the apparatus for use in identifying a location of the apparatus. In some embodiments, the user device may derive information regarding location, movement, position, or orientation of the apparatus based on communication signals perceived by the communications interface such as through signal triangulation or signal fingerprinting, for example. In some embodiments, the user device may combine both sensor information and communication signals to drive a location of the user device.

## Claims

1. A computer-implemented method for providing time-valid location-based information, the method comprising:
for an environment, defining a plurality of cells, each cell comprising:
a respective location with a range based on a geographical extent of the respective cell within the environment;
a respective predetermined validity-time-interval;
respective semantic-location-data relevant to the respective location;
respective executable code instructions configured to operate on the respective semantic-location-data to enable determination of respective time-valid location-based information upon execution of the respective code instructions by a first edge computing apparatus proximal to the respective location;
wherein the respective time-valid location-based information is valid within the respective predetermined validity-time-interval.

2. The method of claim 1, wherein the geographical extent of the respective cell of the plurality of cells is a 3-dimensional-geographical-extent.

3. The method of claim 1 or claim 2, wherein:
the first edge computing apparatus is configured to execute the respective code instructions on the respective semantic-location-data to generate a signed certificate comprising the respective time-valid location-based information for the cell;
a second edge computing apparatus proximal to the respective location is configured to:
execute the respective code instructions on the respective semantic-location-data to generate validation information; and
when the signed certificate matches the validation information to within a predetermined threshold, validate the signed certificate to provide a validated signed certificate.

4. The method of claim 3, wherein, for a respective cell of the plurality of cells:
the respective semantic-location-data comprises presence-data representative of a first-indication-of-presence of a client-device within the geographic extent of the respective cell;
the signed certificate is representative of the first-indication-of-presence of the client-device within the geographic extent of the respective cell;
the validation information is representative of a second-indication-of-presence of the client-device within the geographic extent of the respective cell;
the signed certificate matches the validation information when an overlap between the first-indication-of-presence and the second-indication-of-presence satisfies an overlap criterion; and
when the signed certificate matches the validation information, the validated signed certificate comprises location-data representative of the location of the client-device within the respective cell.

5. The method of claim 4, further comprising, when the validated signed certificate comprises location-data representative of the location of the client-device within the respective cell, providing the client-device with access to cell-information relevant to the respective cell.

6. The method of claim 4 or claim 5, further comprising, when the validated signed certificate comprises location-data representative of the location of the client-device within the respective cell, enabling the client-device to communicate with a second-device present in the respective cell.

7. The method of any preceding claim, wherein the plurality of cells comprises:
a first cell;
a second cell;
a third cell; and
wherein:
the first cell is related to the second cell by a first mapping;
the second cell is related to the third cell by a second mapping;
the first cell is related to the third cell by a third mapping comprising a product of the first mapping with the second mapping; and
the third cell comprises a union of the first cell and the second cell.

8. The method of claim 7, wherein, when a validated signed certificate comprises location-data representative of a presence of a first-client-device within the first cell, providing the first-client-device access to one or more of:
second-semantic-location-data relevant to the second cell;
a second-device within the second cell;
third-semantic-location-data relevant to the third cell; and
a third-device within the third cell.

9. The method of claim 6 or claim 7, wherein the first cell is geographically spaced apart from the second cell such that the first cell is non-overlapping and non-coterminous with the second cell.

10. The method of claim 8 or claim 9, wherein the third cell comprises an intermediate-cell, different than the first cell and the second cell, the method comprising:
when the validated signed certificate comprises location-data representative of a presence of the first-client-device within the first cell, providing first-cell-functionality to the first-client-device; and
when the validated signed certificate comprises an intermediate signed certificate that comprises intermediate-location-data representative of a presence of the first-client-device within the intermediate cell, providing an intermediate-cell-functionality to the first-client-device, wherein the intermediate-cell-functionality is different than the first-cell-functionality.

11. The method of any preceding claim, comprising:
defining a blockchain operative on an edge computing network comprising the first edge computing apparatus;
defining a smart contract for a cell of the plurality of cells, wherein the smart contract comprises the respective executable code instructions for the cell;
executing, using the first edge computing apparatus, the smart contract on the respective semantic-location-data for the cell to provide a signed certificate comprising the respective time-valid location-based information for the cell; and
writing the signed certificate into the blockchain.

12. The method of claim 11, wherein the edge computing network comprises the second edge computing apparatus, the method comprising:
executing, using the second edge computing apparatus, the smart contract on the respective semantic-location-data to provide validation information; and
when the validation information matches the signed certificate to within a predetermined threshold, writing a validated signed certificate, comprising the respective time-valid location-based information, to the blockchain.

13. The method of claim 12, wherein the validated signed certificate is configured to provide the respective time-valid location-based information for the cell to one or more of:
the cell;
an object associated with the cell;
a different cell of the plurality of cells; and
a different object associated with the different cell.

14. A system configured to provide time-valid location-based information for an environment comprising a plurality of cells, each cell comprising:
a respective location with a range based on a geographical extent of the respective cell within the environment;
a respective predetermined validity-time-interval;
respective semantic-location-data relevant to the respective location;
respective executable code instructions configured to operate on the respective semantic-location-data to enable determination of respective time-valid location-based information;
wherein the system comprises:
a first edge computing apparatus proximal to the respective location of the respective cell of the plurality of cells, the first edge computing apparatus configured to execute the respective code instructions to enable determination of the respective time-valid location-based information, and wherein the respective time-valid location-based information is valid within the respective predetermined validity-time-interval.

15. A computer program product comprising one or more computer code instructions configured to perform the method of any of claims 1 to 13 on the system of claim 14.

16. A data structure for providing time-valid location-based information for an environment defined by a plurality of cells, each cell comprising a respective location with a range based on a geographical extent of the respective cell within the environment, the data structure comprising data defining:
a respective predetermined validity-time-interval;
respective semantic-location-data relevant to the respective location; and
respective executable code instructions configured to operate on the respective semantic-location-data to enable determination of respective time-valid location-based information upon execution of the respective code instructions by a first edge computing apparatus proximal to the respective location;
wherein the respective time-valid location-based information is valid within the respective predetermined validity-time-interval.

17. The data structure of claim 16, further comprising data defining:
a blockchain operative on an edge computing network comprising the first edge computing apparatus; and
a smart contract for a cell of the plurality of cells, wherein the smart contract comprises the respective executable code instructions for the cell.
